(19) Europäisches Patentamt European Patent Office Office européen des brevets

(11) **EP 4 250 584 A1**

(12) **EUROPEAN PATENT APPLICATION**
published in accordance with Art. 153(4) EPC

(43) Date of publication:
**27.09.2023 Bulletin 2023/39**

(21) Application number: **21916767.3**

(22) Date of filing: **07.01.2021**

(51) International Patent Classification (IPC):
***H04B 7/06*** (2006.01)

(52) Cooperative Patent Classification (CPC):
**H04B 7/06;** Y02D 30/70

(86) International application number:
**PCT/CN2021/070605**

(87) International publication number:
**WO 2022/147709 (14.07.2022 Gazette 2022/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **XIA, Xin
Shenzhen, Guangdong 518129 (CN)**

• **CHEN, Weimin
Shenzhen, Guangdong 518129 (CN)**
• **ZHANG, Yan
Shenzhen, Guangdong 518129 (CN)**
• **CHEN, Lei
Shenzhen, Guangdong 518129 (CN)**

(74) Representative: **MERH-IP Matias Erny Reichl Hoffmann
Patentanwälte PartG mbB
Paul-Heyse-Strasse 29
80336 München (DE)**

(54) **COMMUNICATION METHOD AND APPARATUS**

(57) This application provides a communication method and apparatus. The method includes: A network device sends a first signal to a first terminal device on a first resource element; the network device receives a fourth signal on a second resource element, where the second resource element and the first resource element at least partially overlap or are adjacent to each other; and the network device sends downlink data by using a first beamforming BF weight, where the first BF weight is obtained based on signal processing performed on the fourth signal, and an operation amount of the signal processing is less than an operation amount of matrix inversion or matrix decomposition. According to the communication method provided in this application, an air interface is used as a calculation resource, so that calculation complexity of a baseband can be reduced.

FIG. 2

EP 4 250 584 A1

**Description**

**TECHNICAL FIELD**

This application relates to the communication field, and more specifically, to a communication method and apparatus.

**BACKGROUND**

A beamforming (beamforming, BF) technology is an important technology in a multi-antenna wireless communication system. Different weights are added to data on different antennas, and a direction of a sending beam is controlled to better match a channel, so that energy can be centralized and coverage can be enhanced. In addition, data streams of different users are transmitted on a same time-frequency resource in a space dimension. This increases a multiplexing gain. When space division is used to transmit the data streams of the different users, a sending weight of each data stream of each user needs to be accurately designed, so that a sending direction of each stream can achieve a reasonable compromise in two requirements of matching a channel eigenvector (eigen-mode) direction of the stream and generating low interference to another stream.

Currently, the design of the sending weight requires a base station to obtain channel information of each user as accurate as possible. In a time division duplex (time division duplex, TDD) system, a sounding reference signal (sounding reference signal, SRS) is usually sent to the base station by user equipment (user equipment, UE) or customer premise equipment (customer premise equipment, CPE). The base station estimates an uplink channel based on the SRS, and obtains a downlink channel based on uplink and downlink channel reciprocity. After obtaining the downlink channel, the base station calculates, by using an algorithm such as singular value decomposition (singular value decomposition, SVD), a BF sending weight used for downlink sending.

A matrix decomposition dimension that needs to be processed for calculating a single-user beamforming (single-user beamforming, SU-BF) weight is a sending antenna dimension of the base station, and implementation costs are high in massive multiple-input multiple-output (multiple-input multiple-output, MIMO). For a multi-user beamforming (multi-user beamforming, MU-BF) weight, matrix inversion on a total quantity of data streams of all paired users in space division multiplexing usually needs to be performed, to eliminate interference between the users. Calculation complexity of the matrix inversion is also high. Therefore, how to reduce calculation complexity of a precoding weight is an urgent problem to be resolved.

**SUMMARY**

This application provides a communication method and apparatus. An air interface is used as a calculation resource, so that calculation complexity of a baseband can be reduced.

According to a first aspect, a communication method is provided. The method may be performed by a network device, or may be performed by a component (for example, a chip or a chip system) configured in the network device. This is not limited in this application.

Specifically, the method includes: sending a first signal to a first terminal device on a first resource element; receiving a fourth signal on a second resource element, where the second resource element and the first resource element at least partially overlap or are adjacent to each other; and sending downlink data by using a first beamforming BF weight, where the first BF weight is obtained based on signal processing performed on the fourth signal, and an operation amount of the signal processing is less than an operation amount of matrix inversion or matrix decomposition.

Based on the foregoing technical solution of this application, the network device sends the first signal to the first terminal device on the first resource element, where the first signal becomes a second signal after being processed by a downlink air interface channel, so that the first terminal device can receive the second signal on the first resource element. The first terminal device obtains a third signal based on signal processing performed on the second signal, and may send the third signal on the second resource element, where the second resource element and the first resource element at least partially overlap or are adjacent to each other, and the third signal becomes the fourth signal after being processed by an uplink air interface channel. The network device may receive the fourth signal on the second resource element, and obtain the first beamforming BF weight based on the signal processing performed on the fourth signal, where the operation amount of the signal processing is less than the operation amount of the matrix inversion or the matrix decomposition. The network device may send the downlink data by using the first beamforming BF weight. Therefore, in this embodiment of this application, a signal is sent on a specific resource element RE based on processing of a channel, and a downlink BF weight is obtained through impact of the channel on the signal in a signal sending process, to equivalently implement calculation of a conventional baseband, so that the baseband does not need to calculate matrix decomposition or inversion in an antenna dimension, and calculation complexity of the baseband can be reduced.

In another aspect, the method provided in this application may support precoding at a finer granularity, so that a precoding weight can better match a channel change, to improve system performance.

It should be understood that, the network device sends the first signal to the first terminal device on the first resource element, so that the first terminal device can receive the second signal on the first resource element. The second signal is used to calculate the third signal sent by the first terminal device on the second resource element.

With reference to the first aspect, in some implementations of the first aspect, the first BF weight is used by the network device to send the downlink data to the first terminal device, the first signal is a random signal or a downlink single-user SU-BF weight used when the network device sends downlink data to the first terminal device on the first resource element or the second resource element last time, the first BF weight is an SU-BF weight used when the network device currently sends downlink data to the first terminal device, and the first terminal device is a terminal device in a single-user multiple-input multiple-output SU-MIMO transmission mode.

Therefore, in this embodiment of this application, an initial random signal or the precoding weight is used as a sending signal, and the SU-BF weight for downlink sending can be obtained without a need to define a dedicated pilot such as a sounding reference signal (sounding reference signal, SRS). Therefore, resources can be saved.

In other words, when determining that a current transmission mode is SU-MIMO, the network device may use, as the first signal, the random signal or the downlink single-user SU-BF weight used when the network device sends the downlink data to the first terminal device on the first resource element or the second resource element last time, and send the first signal to the first terminal device on the first resource element. After performing air interface calculation with the first terminal device, the network device may obtain the SU-BF weight for downlink sending to the first terminal device. When sending the downlink data to the first terminal device, the network device may perform weighted sending on the downlink data by using the first BF weight.

With reference to the first aspect, in some implementations of the first aspect, the first BF weight is used by the network device to send the downlink data to a second terminal device, the first signal is a downlink single-user SU-BF weight corresponding to the second terminal device, the first BF weight is a multi-user MU-BF weight, and the first terminal device and the second terminal device are terminal devices in a multi-user multiple-input multiple-output MU-MIMO transmission mode.

In other words, when determining that a current transmission mode is MU-MIMO, the network device may use, as the first signal, the downlink single-user SU-BF weight corresponding to the second terminal device. The network device sends the first signal to the first terminal device on the first resource element. After performing air interface calculation with the first terminal device, the network device may obtain the MU-BF weight for downlink sending to the second terminal device. When sending the downlink data to the second terminal device, the network device may perform weighted sending on the downlink data by using the first BF weight.

Therefore, in this embodiment of this application, an initial random signal or the precoding weight is used as a sending signal, and the MU-BF weight for downlink sending can be obtained without a need to define a dedicated pilot such as an SRS. Therefore, resources can be saved.

With reference to the first aspect, in some implementations of the first aspect, the method further includes: The network device receives a fifth signal on a third resource element, where the third resource element and the first resource element at least partially overlap or are adjacent to each other. The network device sends a sixth signal to a third terminal device on a fourth resource element, where the fourth resource element and the second resource element at least partially overlap or are adjacent to each other, the sixth signal is obtained based on signal processing performed on the fifth signal, an operation amount of the signal processing is less than the operation amount of the matrix inversion or the matrix decomposition, the sixth signal is used by the network device to receive the fourth signal on the second resource element, and the first terminal device, the second terminal device, and the third terminal device are terminal devices in the MU-MIMO transmission mode.

It should be understood that the network device may use, as the first signal, the downlink single-user SU-BF weight corresponding to the second terminal device, and send the first signal to the first terminal device on the first resource element. The first signal becomes the second signal after being processed by the downlink air interface channel corresponding to the first resource element. The first terminal device may perform signal processing on the second signal, to obtain a seventh signal. An operation amount of the signal processing is less than the operation amount of the matrix inversion or the matrix decomposition. The first terminal device may send the seventh signal to the network device on the third resource element, and then the network device may receive the fifth signal on the third resource element. The fifth signal is formed after the seventh signal is processed by the uplink air interface channel, and the third resource element and the first resource element at least partially overlap or are adjacent to each other. The network device may perform the signal processing on the fifth signal, to obtain the sixth signal, where the operation amount of the signal processing is less than the operation amount of the matrix inversion or the matrix decomposition. Then, the network device sends the sixth signal to the third terminal device on the fourth resource element. The sixth signal becomes an eighth signal after being processed by a downlink air interface channel corresponding to the fourth resource element. The third terminal device may perform signal processing on the eighth signal, to obtain the third signal. Then, the third terminal device sends the third signal to the network device on the second resource element, where the fourth resource element and the second resource element at least partially overlap or are adjacent to each other. Further, the network device receives the fourth signal on the second resource element, where the fourth signal is formed after the third signal sent by the third terminal device on the second resource element is processed by the uplink air interface channel. Still further, the network device performs the signal processing on the fourth signal, to obtain the first beamforming BF weight, where the operation amount of the signal processing is less than the operation amount of the matrix inversion or the matrix decomposition, and the first BF weight is used by the network device to send the downlink data to the second terminal device.

With reference to the first aspect, in some implementations of the first aspect, the signal processing includes a conjugate operation and/or a normalization operation.

In other words, the network device may obtain the precoding weight by performing simple operations such as conjugate and normalization, so that the baseband does not need to calculate the matrix decomposition or inversion in the antenna dimension, and calculation complexity of the baseband can be reduced.

With reference to the first aspect, in some implementations of the first aspect, the first resource element and the second resource element completely overlap.

In other words, a position of a resource for sending a signal by the network device may be the same as a position of a resource for sending a signal by the first terminal device. According to this manner, a more accurate precoding weight can be obtained.

With reference to the first aspect, in some implementations of the first aspect, the first resource element and the third resource element completely overlap, and the second resource element and the fourth resource element completely overlap.

In other words, the position of the resource for sending a signal by the network device may be the same as a position of a resource for sending a signal by each terminal device. According to this manner, a more accurate precoding weight can be obtained.

With reference to the first aspect, in some implementations of the first aspect, the method further includes: receiving a first request message, where the first request message requests the network device to determine a position of the first resource element.

With reference to the first aspect, in some implementations of the first aspect, the method further includes: sending first indication information, where the first indication information indicates the position of the first resource element or a position of the second resource element.

With reference to the first aspect, in some implementations of the first aspect, the method further includes: receiving a second request message, where the second request message requests the network device to send the first signal and/or obtain the first BF weight.

In other words, the network device may start an air interface calculation mode based on a request of the first terminal device, and in subsequent information exchange, the first terminal device and the network device may start to obtain the precoding weight by using an air interface calculation method.

With reference to the first aspect, in some implementations of the first aspect, the method further includes: sending second indication information, where the second indication information indicates the first terminal device to receive a second signal and/or obtain a third signal, the second signal is formed after the first signal is processed by a downlink air interface channel, the third signal is obtained based on signal processing performed on the second signal, and an operation amount of the signal processing is less than the operation amount of the matrix inversion or the matrix decomposition.

In other words, the network device may determine, based on an actual situation or the request of the first terminal device, to start the air interface calculation mode, and notify the first terminal device to start to obtain the precoding weight through air interface calculation in subsequent information exchange.

With reference to the first aspect, in some implementations of the first aspect, the method further includes: sending third indication information, where the third indication information indicates the first terminal device to determine a second BF weight based on the second signal, and the second BF weight is used by the first terminal device to send uplink data to the network device.

With reference to the first aspect, in some implementations of the first aspect, the method further includes: sending fourth indication information, where the fourth indication information indicates the first terminal device to perform weighted sending on the uplink data by using the second BF weight.

With reference to the first aspect, in some implementations of the first aspect, the method further includes: sending power adjustment information to the first terminal device, where the power adjustment information is used to adjust power of the third signal.

With reference to the first aspect, in some implementations of the first aspect, the first resource element or the second resource element includes at least one resource element RE.

In other words, the first resource element or the second resource element may be one resource element (resource element, RE), or may be a combination of a plurality of different REs. For example, the first resource element or the second resource element may be all REs on an orthogonal frequency division multiplexing (Orthogonal Frequency Division Multiplexing, OFDM) symbol of a scheduled data bandwidth, or a segment of separated or consecutive frequency band resources (including a plurality of REs) may be set as the first resource element. According to this manner, a precoding weight of each granularity can be obtained.

According to a second aspect, a communication method is provided. The method may be performed by a terminal device, or may be performed by a component (for example, a chip or a chip system) configured in the terminal device. This is not limited in this application.

Specifically, the method includes: receiving a second signal on a first resource element; and sending a third signal to a network device on a second resource element, where the second resource element and the first resource element at least partially overlap or are adjacent to each other, the third signal is obtained based on signal processing performed on the second signal, and an operation amount of the signal processing is less than an operation amount of matrix inversion or matrix decomposition.

Based on the foregoing technical solution of this application, the network device sends a first signal to a first terminal device on the first resource element, where the first signal becomes the second signal after being processed by a downlink air interface channel, so that the first terminal device can receive the second signal on the first resource element. After obtaining the third signal based on the signal processing performed on the second signal, the first terminal device may send the third signal on the second resource element, where the second resource element and the first resource element at least partially overlap or are adjacent to each other, and the third signal becomes a fourth signal after being processed by an uplink air interface channel. The network device may receive the fourth signal on the second resource element, and obtain a first beamforming BF weight based on signal processing performed on the fourth signal, where an operation amount of the signal processing is less than the operation amount of the matrix inversion or the matrix decomposition. The network device may send downlink data by using the first beamforming BF weight. Therefore, in this embodiment of this application, a signal is sent on a specific resource element RE based on processing of a channel, and a downlink BF weight is obtained through impact of the channel on the signal in a signal sending process, to equivalently implement calculation of a conventional baseband, so that the baseband does not need to calculate matrix decomposition or inversion in an antenna dimension, and calculation complexity of the baseband can be reduced.

In another aspect, the method provided in this application may support precoding at a finer granularity, so that a precoding weight can better match a channel change, to improve system performance.

It should be understood that the first terminal device sends the third signal to the network device on the second resource element, so that the network device can receive the fourth signal on the second resource element. The fourth signal is used to calculate the first beamforming BF weight. The first BF weight is used by the network device to send the downlink data to the first terminal device, or is used by the network device to send the downlink data to a second terminal device.

With reference to the second aspect, in some implementations of the second aspect, the signal processing includes a conjugate operation and/or a normalization operation.

In other words, after performing the conjugate operation on the second signal, the first terminal device may further perform the normalization operation on an obtained result, to obtain the third signal.

With reference to the second aspect, in some implementations of the second aspect, the first resource element and the second resource element completely overlap.

In other words, a position of a resource for sending a signal by the network device may be the same as a position of a resource for sending a signal by the first terminal device. According to this manner, a more accurate precoding weight can be obtained.

With reference to the second aspect, in some implementations of the second aspect, the method further includes: sending a first request message, where the first request message requests the network device to determine a position of the first resource element.

In other words, the position of the first resource element may be agreed upon by the network device and the first terminal device through negotiation. For example, the first terminal device sends the first request message to the network device, to request the network device to determine the position of the first resource element.

With reference to the second aspect, in some implementations of the second aspect, the method further includes: receiving first indication information, where the first indication information indicates the position of the first resource element or a position of the second resource element.

With reference to the second aspect, in some implementations of the second aspect, the method further includes: sending a second request message, where the second request message requests the network device to send a first signal and/or obtain a first beamforming BF weight, the second signal is formed after the first signal is processed by a downlink air interface channel, and the first BF weight is used by the network device to send downlink data to the first terminal device or a second terminal device.

In other words, the first terminal device may request to start an air interface calculation mode, and in subsequent information exchange, the first terminal device and the network device may start to obtain the precoding weight by using an air interface calculation method.

With reference to the second aspect, in some implementations of the second aspect, the method further includes: receiving second indication information, where the second indication information indicates the first terminal device to receive the second signal and/or obtain the third signal.

In other words, the network device may determine, based on an actual situation or a request of the first terminal device, to start the air interface calculation mode, and notify the first terminal device to start to obtain the precoding weight through air interface calculation in subsequent information exchange.

With reference to the second aspect, in some implementations of the second aspect, the second signal is further used to determine a second BF weight, the second BF weight is used by the first terminal device to send uplink data to the network device, and the method further includes: determining the second BF weight based on the second signal.

With reference to the second aspect, in some implementations of the second aspect, the method further includes: receiving third indication information, where the third indication information indicates the first terminal device to determine the second BF weight based on the second signal.

With reference to the second aspect, in some implementations of the second aspect, the method further includes: receiving fourth indication information, where the fourth indication information indicates the first terminal device to perform weighted sending on the uplink data by using the second BF weight.

With reference to the second aspect, in some implementations of the second aspect, the method further includes: determining the second BF weight as the third signal.

With reference to the second aspect, in some implementations of the second aspect, the method further includes: receiving power adjustment information, where the power adjustment information is used to adjust power of the third signal; adjusting the power of the third signal based on the power adjustment information; and sending the adjusted third signal to the network device.

With reference to the second aspect, in some implementations of the second aspect, the first resource element or the second resource element includes at least one resource element RE.

In other words, the first resource element or the second resource element may be one resource element (resource element, RE), or may be a combination of a plurality of different REs. For example, the first resource element or the second resource element may be all REs on an orthogonal frequency division multiplexing (Orthogonal Frequency Division Multiplexing, OFDM) symbol of a scheduled data bandwidth, or a segment of separated or consecutive frequency band resources (including a plurality of REs) may be set as the first resource element. According to this manner, a precoding weight of each granularity can be obtained.

According to a third aspect, a communication apparatus is provided. The communication apparatus is configured to perform the communication method provided in the first aspect. Specifically, the communication apparatus may include a unit configured to perform the communication method provided in the first aspect.

For example, the communication apparatus includes a processing unit and a transceiver unit.

The transceiver unit is configured to send a first signal to a first terminal device on a first resource element. The transceiver unit is further configured to receive a fourth signal on a second resource element. The transceiver unit is further configured to send downlink data by using a first beamforming BF weight, where the first BF weight is obtained based on signal processing performed on the fourth signal, and an operation amount of the signal processing is less than an operation amount of matrix inversion or matrix decomposition.

Optionally, the processing unit is configured to obtain the first BF weight based on the signal processing performed on the fourth signal.

Optionally, the first BF weight is used by a network device to send the downlink data to the first terminal device, the first signal is a random signal or a downlink single-user SU-BF weight used when the network device sends downlink data to the first terminal device on the first resource element or the second resource element last time, the first BF weight is an SU-BF weight used when the network device currently sends downlink data to the first terminal device, and the first terminal device is a terminal device in a single-user multiple-input multiple-output SU-MIMO transmission mode.

Optionally, the first BF weight is used by the network device to send the downlink data to a second terminal device, the first signal is a downlink single-user SU-BF weight corresponding to the second terminal device, the first BF weight is a multi-user MU-BF weight, and the first terminal device and the second terminal device are terminal devices in a multi-user multiple-input multiple-output MU-MIMO transmission mode.

Optionally, the transceiver unit is further configured to receive a fifth signal on a third resource element, where the third resource element and the first resource element at least partially overlap or are adjacent to each other. The transceiver unit is further configured to send a sixth signal to a third terminal device on a fourth resource element, where the fourth resource element and the second resource element at least partially overlap or are adjacent to each other, the sixth signal is obtained based on signal processing performed on the fifth signal, an operation amount of the signal processing is less than the operation amount of the matrix inversion or the matrix decomposition, the sixth signal is used by the network device to receive the fourth signal on the second resource element, and the first terminal device, the second terminal device, and the third terminal device are terminal devices in the MU-MIMO transmission mode.

Optionally, the signal processing includes a conjugate operation and/or a normalization operation.

Optionally, the first resource element and the second resource element completely overlap.

Optionally, the first resource element and the third resource element completely overlap, and the second resource element and the fourth resource element completely overlap.

Optionally, the transceiver unit is further configured to receive a first request message, where the first request message requests the network device to determine a position of the first resource element.

Optionally, the transceiver unit is further configured to send first indication information, where the first indication information indicates the position of the first resource element or a position of the second resource element.

Optionally, the transceiver unit is further configured to receive a second request message, where the second request message requests the network device to send the first signal and/or obtain the first BF weight.

Optionally, the transceiver unit is further configured to send second indication information, where the second indication information indicates the first terminal device to receive a second signal and/or obtain a third signal, the second signal is formed after the first signal is processed by a downlink air interface channel, the third signal is obtained based on signal processing performed on the second signal, and an operation amount of the signal processing is less than the operation amount of the matrix inversion or the matrix decomposition.

Optionally, the transceiver unit is further configured to send third indication information, where the third indication information indicates the first terminal device to determine a second BF weight based on the second signal, and the second BF weight is used by the first terminal device to send uplink data to the network device.

Optionally, the transceiver unit is further configured to send fourth indication information, where the fourth indication information indicates the first terminal device to perform weighted sending on the uplink data by using the second BF weight.

Optionally, the transceiver unit is further configured to send power adjustment information to the first terminal device, where the power adjustment information is used to adjust power of the third signal.

Optionally, the first resource element or the second resource element includes at least one resource element RE.

According to a fourth aspect, a communication apparatus is provided. The apparatus is configured to perform the communication method provided in the second aspect. Specifically, the communication apparatus may include a unit configured to perform the communication method provided in the second aspect.

For example, the communication apparatus includes a processing unit and a transceiver unit.

The transceiver unit is configured to receive a second signal on a first resource element. The transceiver unit is further configured to send a third signal to a network device on a second resource element, where the second resource element and the first resource element at least partially overlap or are adjacent to each other, the third signal is obtained based on signal processing performed on the second signal, and an operation amount of the signal processing is less than an operation amount of matrix inversion or matrix decomposition.

Optionally, the processing unit is configured to obtain the third signal based on the signal processing performed on the second signal.

Optionally, the signal processing includes a conjugate operation and/or a normalization operation.

Optionally, the first resource element and the second resource element completely overlap.

Optionally, the transceiver unit is further configured to send a first request message, where the first request message requests the network device to determine a position of the first resource element.

Optionally, the transceiver unit is further configured to receive first indication information, where the first indication information indicates the position of the first resource element or a position of the second resource element.

Optionally, the transceiver unit is further configured to send a second request message, where the second request message requests the network device to send a first signal and/or obtain a first BF weight, the second signal is formed after the first signal is processed by a downlink air interface channel, and the first BF weight is used by the network device to send downlink data to the first terminal device or a second terminal device.

Optionally, the transceiver unit is further configured to receive second indication information, where the second indication information indicates the first terminal device to receive the second signal and/or obtain the third signal.

Optionally, the second signal is further used to determine a second BF weight, the second BF weight is used by the first terminal device to send uplink data to the network device, and the processing unit is further configured to determine the second BF weight based on the second signal.

Optionally, the transceiver unit is further configured to receive third indication information, where the third indication information indicates the first terminal device to determine the second BF weight based on the second signal.

Optionally, the transceiver unit is further configured to receive fourth indication information, where the fourth indication information indicates the first terminal device to perform weighted sending on the uplink data by using the second BF weight.

Optionally, the processing unit is further configured to determine the second BF weight as the third signal.

Optionally, the transceiver unit is further configured to receive power adjustment information, where the power adjustment information is used to adjust power of the third signal. The processing unit is further configured to adjust the power of the third signal based on the power adjustment information. The transceiver unit is further configured to send the adjusted third signal to the network device.

Optionally, the first resource element or the second resource element includes at least one resource element RE.

According to a fifth aspect, a communication apparatus is provided, and includes a processor. The processor is coupled to a memory, and may be configured to execute instructions in the memory, to implement the communication method according to any one of the possible implementations of the first aspect. Optionally, the communication apparatus further includes the memory. Optionally, the communication apparatus further includes a communication interface, the processor is coupled to the communication interface, and the communication interface is configured to input and/or output information. The information includes at least one of instructions and data.

In an implementation, the communication apparatus is a network device. When the communication apparatus is the network device, the communication interface may be a transceiver or an input/output interface.

In another implementation, the communication apparatus is a chip or a chip system. When the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

In another implementation, the communication apparatus is a chip or a chip system disposed in a network device.

Optionally, the transceiver may be a transceiver circuit. Optionally, the input/output interface may be an input/output circuit.

According to a sixth aspect, a communication apparatus is provided, and includes a processor. The processor is coupled to a memory, and may be configured to execute instructions in the memory, to implement the communication method according to any one of the possible implementations of the second aspect. Optionally, the communication apparatus further includes the memory. Optionally, the communication apparatus further includes a communication interface, the processor is coupled to the communication interface, and the communication interface is configured to input and/or output information. The information includes at least one of instructions and data.

In an implementation, the communication apparatus is a terminal device. When the communication apparatus is a first terminal device, the communication interface may be a transceiver or an input/output interface.

In another implementation, the communication apparatus is a chip or a chip system. When the communication apparatus is the chip or the chip system, the communication interface may be an input/output interface, or may be an input/output interface, an interface circuit, an output circuit, an input circuit, a pin, a related circuit, or the like on the chip or the chip system. The processor may alternatively be embodied as a processing circuit or a logic circuit.

In another implementation, the communication apparatus is a chip or a chip system configured in a terminal device.

Optionally, the transceiver may be a transceiver circuit. Optionally, the input/output interface may be an input/output circuit.

According to a seventh aspect, a computer-readable storage medium is provided. The computer-readable storage medium stores a computer program, and when the computer program is executed by a communication apparatus, the communication apparatus is enabled to implement the communication method according to any one of the possible implementations of the first aspect or the second aspect.

According to an eighth aspect, a computer program product including instructions is provided. When the instructions are executed by a computer, a communication apparatus is enabled to implement the communication method according to any one of the possible implementations of the first aspect or the second aspect.

According to a ninth aspect, a communication system is provided, and includes the foregoing network device and the foregoing first terminal device.

## BRIEF DESCRIPTION OF DRAWINGS

FIG. 1 is a schematic diagram of a communication system applicable to a communication method according to an embodiment of this application;

FIG. 2 is a schematic flowchart of a communication method according to an embodiment of this application;

FIG. 3 is a schematic flowchart of another communication method according to an embodiment of this application;

FIG. 4 is a schematic flowchart of another communication method according to an embodiment of this application;

FIG. 5 is a schematic flowchart of still another communication method according to an embodiment of this application;

FIG. 6 is a schematic block diagram of a communication apparatus according to an embodiment of this application;

FIG. 7 is a schematic diagram of a structure of a terminal device according to an embodiment of this application; and
FIG. 8 is a schematic diagram of a structure of a network device according to an embodiment of this application.

## DESCRIPTION OF EMBODIMENTS

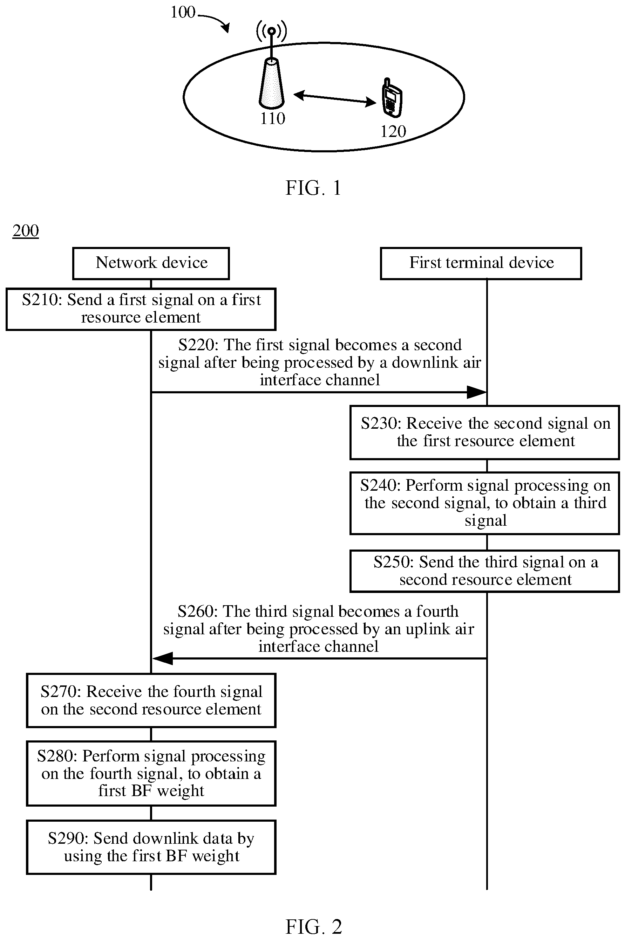

The following describes technical solutions of this application with reference to the accompanying drawings. FIG. 1 is a schematic diagram of a communication system 100 applicable to a communication method according to an embodiment of this application. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other through a radio link. A plurality of antennas may be configured for each communication device, for example, the network device 110 or the terminal device 120. For each communication device in the communication system, the plurality of configured antennas may include at least one sending antenna configured to send a signal and at least one receiving antenna configured to receive a signal. Therefore, the communication devices in the communication system, for example, the network device 110 and the terminal device 120, may communicate with each other by using a multi-antenna technology.

It should be understood that the network device in the communication system may be any device with a wireless transceiver function. The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home NodeB, or home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission point, TP), a transmission and reception point (transmission and reception point, TRP), or the like; or may be a gNB or a transmission point (TRP or TP) in a 5G system, for example, an NR system, or one or a group (including a plurality of antenna panels) of antenna panels of a base station in the 5G system; or may be a network node that constitutes the gNB or the transmission point, for example, a baseband unit (BBU) or a distributed unit (distributed unit, DU).

In some deployments, the gNB may include a centralized unit (centralized unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

It should be further understood that the terminal device in the wireless communication system may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in this embodiment of this application may be a mobile phone (mobile phone), a tablet (tablet), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a mobile terminal configured in a vehicle, or the like. The terminal device in this embodiment of this application may also be customer premise equipment (customer premise equipment, CPE). An application scenario is not limited in this embodiment of this application.

It should be further understood that FIG. 1 is merely a simplified schematic diagram of an example for ease of understanding. The communication system may further include another network device or another terminal device, which is not shown in FIG. 1.

For ease of understanding embodiments of this application, the following briefly describes a process of processing a downlink signal at the physical layer before the downlink signal is sent. It should be understood that the process of processing the downlink signal described below may be performed by the network device, or may be performed by a chip configured in the network device. For ease of description, the network device and the chip are collectively referred to as a network device below.

The network device may process a code word (code word) on a physical channel. The code word may be a coded bit obtained through coding (for example, including channel coding). The code word is scrambled (scrambled), to generate a scrambled bit. Modulation mapping (modulation mapping) is performed on the scrambled bit, to obtain a modulated symbol. The modulated symbol is mapped to a plurality of layers (layers) through layer mapping (layer mapping). The layer is also referred to as a transport layer. The modulated symbol on which the layer mapping is performed is precoded (precoded), to obtain a precoded signal. The precoded signal is mapped to a plurality of resource elements (resource elements, REs) after RE mapping is performed. The REs are subsequently modulated through orthogonal multiplexing (orthogonal frequency division multiplexing, OFDM) and then sent through an antenna port (antenna port).

It should be understood that the process of processing the downlink signal described above is merely an example for description, and shall not constitute any limitation on this application. For the specific process of processing the downlink signal, refer to a conventional technology. For brevity, detailed descriptions of the specific process are omitted herein.

For ease of understanding of embodiments of this application, the following briefly describes terms or concepts used in embodiments of this application.

1. Precoding (precoding) technology

A sending device (for example, a base station) processes a to-be-sent signal by using a precoding matrix that matches a channel state, so that the precoded to-be-sent signal adapts to a channel, and complexity of eliminating inter-channel impact by a receiving device (for example, a terminal device) is reduced. Therefore, after the to-be-sent signal is precoded, received signal quality (for example, a signal to interference plus noise ratio (signal to interference plus noise ratio, SINR)) is improved. Therefore, the sending device and a plurality of receiving devices can implement transmission on a same time-frequency resource by using the precoding technology. That is, multi-user multiple-input multiple-output (multi-user multiple-input multiple-output, MU-MIMO) is implemented.

2. Beamforming

Beamforming (beamforming, BF), also referred to as beamforming or spatial filtering, is a signal processing technology of using a sensor array to send and receive signals directionally. In a beamforming technology, a parameter of a basic unit of a phase array is adjusted, so that signals at some angles are constructively interfered and signals at some other angles are destructively interfered. Beamforming may be used at both a signal sending end and a signal receiving end.

BF in this application is mainly BF in a full digital domain, namely, digital beamforming (digital beamforming, DBF). A concept of the technology is basically the same as that of precoding in this field. This is not distinguished in this application.

3. Precoding weight

The precoding weight is a precoding vector or a precoding matrix, and the precoding weight is used to perform weighted sending on to-be-transmitted data, to control a direction of a sending beam to better match a channel. The precoding weight may also be referred to as a sending weight or a transmit weight. A person skilled in the art should understand that the precoding matrix includes precoding vectors, and the precoding vectors in the precoding matrix may have a same part in terms of composition or another attribute.

The precoding weight may include a single-user beamforming (single-user beamforming, SU-BF) weight and a multi-user beamforming (multi-user beamforming, MU-BF) weight.

4. Air interface calculation

In embodiments of this application, a calculation mode in which an air interface is used as a resource, namely, a process in which a precoding weight is obtained by transmitting a signal back and forth on an air interface channel, is referred to as "air interface calculation". The term "air interface calculation" in other places in this application refers to this method or procedure.

The following describes in detail the method provided in embodiments of this application with reference to the accompanying drawings. FIG. 2 is a schematic flowchart of a communication method 200 according to an embodiment of this application. The method 200 in FIG. 2 may be performed by the system 100 in FIG. 1, and the method shown in FIG. 2 may be used to obtain a precoding weight for downlink sending.

S210: A network device sends a first signal to a first terminal device on a first resource element.

In this embodiment of this application, the first resource element or a second resource element includes some resource elements on a resource grid (resource grid, RG). The first resource element or the second resource element may be one resource element (resource element, RE), or may be a combination of a plurality of different REs. For example, the first resource element or the second resource element may be all REs on an orthogonal frequency division multiplexing (Orthogonal Frequency Division Multiplexing, OFDM) symbol of a scheduled data bandwidth, or a segment of separated or consecutive frequency band resources (including a plurality of REs) may be set as the first resource element or the second resource element. For example, REs on which all even-numbered subcarriers (subcarriers) are located on an OFDM symbol constitute the first resource element. Alternatively, the first resource element or the second resource element may be all time domain resources in one slot (slot) on a subcarrier, or REs on which all odd-numbered symbols (symbols) are located in one slot (slot) on a subcarrier may be set as the first resource element or the second resource element. In addition, the first resource element or the second resource element may alternatively be a special reference signal configured by the network device, and a resource position (including a time domain position and a frequency domain position) corresponding to the reference signal is a position of the first resource element or the second resource element. Specific forms and content of the first resource element and the second resource element are not limited in this embodiment of this application.

It should be understood that the positions of the first resource element and the second resource element may be defined in a protocol, and both the network device and the first terminal device know that the resource elements are used for air interface calculation. In other words, the first resource element or the second resource element may be some REs reserved in uplink and downlink subframes, and the REs are specially used for sending and/or receiving specific signals, for example, signals used for air interface calculation.

Alternatively, the positions of the first resource element and the second resource element may be agreed upon by the network device and the first terminal device through negotiation. A specific agreement manner is not limited in this embodiment of this application.

In a possible implementation, the network device may first determine the position of the first resource element, and then notify the first terminal device of the position of the resource element by sending indication information to the first terminal device. For example, the network device may include first indication information in a physical downlink control channel (Physical Downlink Control Channel, PDCCH), or send semi-static signaling to the first terminal device, where the semi-static signaling includes the first indication information, and the first indication information indicates the position of the first resource element.

In a possible implementation, alternatively, a resource for air interface calculation may be determined based on a request of the first terminal device. The first terminal device sends first request information to the network device, where the first request information requests the network device to determine the position of the first resource element. The network device determines the position of the first resource element or the second resource element based on the first request information, and sends first indication information to the first terminal device, where the first indication information indicates the position of the first resource element or the second resource element. In other words, the first terminal device may send a request message to the network device, to request the network device to determine the position of the first resource element. If the network device determines that the first resource element is currently not occupied and may be used for air interface calculation, the network device sends the first indication information to the first terminal device, to indicate the position of the first resource element. If the network device determines that the first resource element is currently occupied by other signaling, the network device may determine the position of the second resource element based on an actual situation, and send the first indication information to the first terminal device, to indicate the position of the second resource element, where the second resource element may be a resource that at least partially overlaps or is adjacent to the first resource element.

Optionally, when sending the first indication information to the first terminal device, the network device may further send configuration information. The configuration information may include a time interval between the first resource element and the second resource element, duration, bandwidth density, a bandwidth range, initial beam information, or the like of the first resource element or the second resource element. Specifically, the network device may specify the time interval between the first resource element and the second resource element. For example, X slots (slots) are one time interval, where X is a positive integer. The network device may further configure the initial beam information for the first resource element or the second resource element, for example, indicate a quasi-co-location relationship between the resource element and a reference signal, to assist the first terminal device in initial receiving of the first resource element. Optionally, the network device may configure a plurality of first resource elements or second resource elements, and distinguish between the first resource elements or the second resource elements by using indexes. The network device may further send an index list of the first resource element or the second resource element to the first terminal device in advance. When the network device sends the first indication information to the first terminal device, the first indication information may be an index value of the first resource element or the second resource element. After receiving the indication information, the first terminal device determines a specific position of the first resource element or the second resource element based on a correspondence between an index value and a resource element position.

A specific manner in which the first indication information indicates the first resource element or the second resource element is not limited in this embodiment of this application.

In this embodiment of this application, the first resource element and the second resource element are used as "specific REs", and are used by the network device and the terminal device to send uplink and downlink signals when performing air interface calculation. After the positions of the first resource element and the second resource element are determined through negotiation, the network device sends the first signal to the first terminal device on the first resource element.

S220: After the network device sends the first signal, the first signal becomes a second signal after being processed by a downlink air interface channel corresponding to the first resource element.

It should be understood that, in this embodiment of this application, an air interface is used as a calculation resource, and the first signal is affected by the downlink air interface channel corresponding to the first resource element. At a receiving end, the first signal has been processed by the downlink air interface channel, and becomes another signal different from the first signal.

S230: The first terminal device receives the second signal on the first resource element.

The first terminal device may receive the second signal on the first resource element, to start an air interface calculation procedure.

S240: The first terminal device performs signal processing on the second signal, to obtain a third signal, where an operation amount of the signal processing is less than an operation amount of matrix inversion or matrix decomposition.

In an example, the first terminal device may perform a conjugate operation and/or a normalization operation on the second signal, to obtain the third signal.

Optionally, the second signal may be further used to determine a second beamforming BF weight. The first terminal device may further determine the second BF weight based on the second signal, where the second BF weight is used by the first terminal device to send uplink data to the network device. For example, the first terminal device may perform the conjugate operation and/or the normalization operation on the second signal, to obtain the second BF weight.

In a possible implementation, the first terminal device may use, as the third signal, the second BF weight obtained through calculation.

In a possible implementation, whether the first terminal device determines the second BF weight based on the second signal may be agreed by the network device or agreed in a protocol. For example, the network device may send third indication information to the first terminal device, where the third indication information indicates the first terminal device to determine the second BF weight based on the second signal. Specifically, the network device may indicate a quantity N of transmission times, where N is a positive integer. After N times of uplink and downlink transmission, the first terminal device applies, to uplink signal transmission, the second BF weight determined based on the second signal, where N may be the same as a quantity of sending times, of the first resource element, configured by the network device.

In a possible implementation, the network device may further indicate, by using other signaling, whether the first terminal device uses the second BF weight for transmission, or indicate the terminal to transmit which reference signals or channels. For example, the network device sends fourth indication information, where the fourth indication information indicates the first terminal device to perform weighted sending on the uplink data by using the second BF weight.

Optionally, the network device and the first terminal device may further agree that the second BF weight should be used for uplink transmission at a specific moment, on a specific channel, or on a specific reference signal. For example, the network device may indicate the first terminal device to determine, by using the index value of the first resource element, whether a signal on the resource element should be sent by using the second BF weight. In this case, the first indication information may indicate position information of the first resource element, and may indicate whether to use the second BF weight for uplink transmission.

S250: The first terminal device sends the third signal to the network device on the second resource element, where the second resource element and the first resource element at least partially overlap or are adjacent to each other.

When the network device and the first terminal device perform air interface calculation, the network device may send the first signal by using the first resource element, so that the first terminal device can receive the second signal on the first resource element. The second signal is formed after the first signal is processed by the downlink air interface channel corresponding to the first resource element. In addition, the first terminal device may send the third signal by using the second resource element, so that the network device receives a fourth signal on the second resource element. The fourth signal is formed after the third signal is processed by an uplink air interface channel corresponding to the second resource element, and the position of the second resource element and the position of the first resource element at least partially overlap or are adjacent to each other. In a possible implementation, the first resource element and the second resource element may be resources that completely overlap. In other words, a position of a resource for sending a signal by the network device may be the same as a position of a resource for sending a signal by the first terminal device. According to this manner, the network device can obtain a more accurate precoding weight.

In a possible implementation, the position of the resource for sending a signal by the network device and the position of the resource for sending a signal by the first terminal device may alternatively be adj acent to each other or partially overlap. When the positions of the resources are adjacent to each other or at least partially overlap, transmission channels corresponding to the resources are close. Therefore, according to this manner, when the position of the first resource element corresponding to the first terminal device is occupied, air interface calculation can be performed in time and smoothly.

Optionally, the network device may indicate power of the third signal sent by the terminal. In this case, the terminal device needs to adjust the power of the third signal based on an indication of the network device. For example, the network device may send power adjustment information to the first terminal device, where the power adjustment information is used to adjust the power of the third signal. After receiving the power adjustment information, the first terminal device adjusts the power of the third signal based on the power adjustment information, and the first terminal device sends the adjusted third signal to the network device. In a possible implementation, the network device configures a corresponding path loss measurement reference signal and target power information for the third signal, and the first terminal device measures the path loss measurement reference signal and determines a sending power of the third signal.

S260: The third signal becomes the fourth signal after being processed by the uplink air interface channel corresponding to the second resource element.

It should be understood that, in this embodiment of this application, the air interface is used as the calculation resource, and the third signal is affected by the uplink air interface channel on which the second resource element is located. At the receiving end, the third signal has been processed by the uplink air interface channel, and becomes another signal different from the third signal.

S270: The network device receives the fourth signal on the second resource element.

The third signal becomes the fourth signal on a receiving antenna of the network device after being processed by the uplink air interface channel corresponding to the second resource element. The network device receives the fourth signal on the second resource element.

S280: The network device performs signal processing on the fourth signal, to obtain a first beamforming BF weight, where an operation amount of the signal processing is less than the operation amount of the matrix inversion or the matrix decomposition, and the first BF weight is used by the network device to send downlink data to the first terminal device, or is used by the network device to send the downlink data to a second terminal device.

In a possible implementation, after receiving the fourth signal, the network device may perform the conjugate operation and/or the normalization operation on the fourth signal, to obtain the first BF weight. The network device may use the first BF weight as a BF weight for downlink sending to the first terminal device, or use the first BF weight as a BF weight for downlink sending to the second terminal device.

S290: The network device sends the downlink data by using the first beamforming BF weight.

Therefore, in this embodiment of this application, a signal is sent on a specific resource element RE based on processing of a channel, and a downlink BF weight is obtained through impact of the channel on the signal in a signal sending process, to equivalently implement calculation of a conventional baseband, so that the baseband does not need to calculate matrix decomposition or inversion in an antenna dimension, and calculation complexity of the baseband can be reduced.

It should be understood that, in the solution of this application, specific implementation of singular value decomposition (singular value decomposition, SVD) of a channel matrix is replaced with a method such as a power method (power method), a Jacobi method (Jacobi method), or a Lanzcos algorithm. In this way, most calculation amounts can be split into an air interface transmission process, thereby reducing calculation complexity of the baseband.

It should be understood that, in a TDD system, due to uplink and downlink reciprocity, a downlink channel matrix $H_d$ and an uplink channel matrix $H_u$ have the following relationship:

$$H_d{}^H = H_u{}^*,$$

where
$H_d{}^H$ is a conjugate transposed matrix of the downlink channel matrix $H_d$, and $H_u{}^*$ is a conjugate matrix of the uplink channel matrix $H_u$.

For a precoding vector V, an autocorrelation function $R_{hh} = H_d{}^H H_d$ of the channel matrix $H_d$ may be split, that is, $R_{hh}{}^n = (H_d{}^H H_d)^n = (H_d{}^H H_d)^{n-1}(H_u(H_d)^*)^*$.

Obtaining the precoding vector V is calculating a primary eigenvector of $R_{hh}$. According to a calculation principle of the power method, the following formula is obtained:

$$V = R_{hh}{}^{n} f^{(0)} = (H_d{}^{H} H_d)^{n} f^{(0)} = (H_d{}^{H} H_d)^{n-1} (H_u (H_d f^{(0)})^{*})^{*},$$

where

$f^{(0)}$ is any initial vector.

Therefore, the precoding weight may be obtained through calculation by using simple operations such as conjugate and normalization after any initial signal is processed by the downlink air interface channel $H_d$ and the uplink air interface channel $H_u$.

It should be understood that the foregoing is described by using only the power method as an example. During actual application, the calculation may also be implemented by using the method such as the Jacobi method (Jacobi method) or the Lanzcos algorithm. For a basic principle of each mathematical algorithm, refer to a conventional technology.

In another aspect, this embodiment of this application may support precoding at a finer granularity, so that the precoding weight can better match a channel change, to improve system performance.

In still another aspect, according to the method in this embodiment of this application, calculation resources of the baseband can be saved, system costs can be reduced, and power consumption can be reduced.

Optionally, after the first terminal device obtains the second BF weight, the first terminal device may alternatively perform weighted sending on the uplink data by using the second BF weight based on an actual situation.

It should be understood that the first resource element and the second resource element in this embodiment of this application refer to the positions of the first resource element and the second resource element in some cases. A person skilled in the art should understand a true meaning of each description based on specific implementation of the solution and a context description. For example, the network device sends the first signal on the first resource element, and the first terminal device receives the second signal on the first resource element. The first resource elements in descriptions of the two places are resource elements having a same position.

It should be understood that FIG. 2 is described by using only an example in which the first signal is repeatedly transmitted once. However, during actual application, the network device and the first terminal device may alternatively perform the procedure in FIG. 2 for a plurality of times, and use, as the first BF weight, a final result obtained by the network device. A specific quantity of times the first signal is repeatedly transmitted may be determined based on an internal algorithm and a channel change speed. By way of example but not limitation, in a typical static or low-speed moving scenario, the first signal may be sent for one to three times in a ping-pong (ping-pang) manner on uplink and downlink air interface channels. If ping-pong is required for a plurality of times, when sending the first indication information to the first terminal device, the network device may further send configuration information, where the configuration information may include a time interval between current ping-pang and next ping-pang.

In a possible implementation, the first signal may be a random signal or a downlink SU-BF weight used when the network device sends the downlink data to the first terminal device on the first resource element or the second resource element last time, the first BF weight may be a single-user SU-BF weight used when the network device currently sends the downlink data to the first terminal device, and the first BF weight is used by the network device to send the downlink data to the first terminal device. The first terminal device may be a terminal device in a single-user multiple-input multiple-output SU-MIMO transmission mode.

When determining that a current transmission mode is SU-MIMO, the network device may use the random signal as the first signal or the downlink SU-BF weight used when the network device sends the downlink data to the first terminal device on the first resource element or the second resource element last time, and send the first signal to the first terminal device on the first resource element. After performing air interface calculation with the first terminal device, the network device may obtain the SU-BF weight for current downlink sending to the first terminal device. When sending the downlink data to the first terminal device, the network device may perform weighted sending on the downlink data by using the first BF weight.

In a possible implementation, the first signal may be a single-user SU-BF weight used by the network device for downlink sending to the second terminal device, the first BF weight may be a multi-user MU-BF weight, and the first BF weight is used by the network device to send the downlink data to the second terminal device. The first terminal device and the second terminal device may be terminal devices in a multi-user multiple-input multiple-output MU-MIMO transmission mode.

Optionally, the method further includes: The network device receives a fifth signal on a third resource element, where the third resource element and the first resource element at least partially overlap or are adjacent to each other. The network device performs signal processing on the fifth signal, to obtain a sixth signal, where an operation amount of the signal processing is less than the operation amount of the matrix inversion or the matrix decomposition, and the signal processing may include the conjugate operation and/or the normalization operation. The network device sends the sixth signal to a third terminal device on a fourth resource element, where the fourth resource element and the second resource element at least partially overlap or are adjacent to each other, and the sixth signal is used by the network device to receive the fourth signal on the second resource element. The first terminal device, the second terminal device, and the third terminal device may be terminal devices in the MU-MIMO transmission mode.

In a possible implementation, the first resource element and the third resource element may be resources that completely overlap, and the second resource element and the fourth resource element may be resources that completely overlap. In other words, the position of the resource for sending a signal by the network device may be the same as a position of a resource for sending a signal by each terminal device. According to this manner, the network device can obtain a more accurate precoding weight.

When determining that the current transmission mode is MU-MIMO, the network device may use, as the first signal, the downlink single-user SU-BF weight corresponding to the second terminal device. The network device sends the first signal to the first terminal device on the first resource element. After performing air interface calculation with the first terminal device, the network device may obtain the MU-BF weight for downlink sending to the second terminal device. When sending the downlink data to the second terminal device, the network device may perform weighted sending on the downlink data by using the first BF weight.

It should be understood that, when the network device communicates with a plurality of users, the network device and each terminal device may perform the procedure shown in FIG. 2 to obtain MU-BF. The network device may use, as the first signal, the downlink single-user SU-BF weight corresponding to the second terminal device, and send the first signal to the first terminal device on the first resource element. The first signal becomes the second signal after being processed by the downlink air interface channel corresponding to the first resource element. The first terminal device may perform signal processing on the second signal, to obtain a seventh signal. The first terminal device sends the seventh signal to the network device on the third resource element, and then the network device receives the fifth signal on the third resource element. The fifth signal is formed after the seventh signal is processed by an uplink air interface channel corresponding to the third resource element, and the third resource element and the first resource element at least partially overlap or are adjacent to each other. The network device may perform the signal processing on the fifth signal, to obtain the sixth signal, where the operation amount of the signal processing is less than the operation amount of the matrix inversion or the matrix decomposition, and the signal processing may include the conjugate operation, or may include the normalization operation. Then, the network device sends the sixth signal to the third terminal device on the fourth resource element. The sixth signal becomes an eighth signal after being processed by a downlink air interface channel corresponding to the fourth resource element. The third terminal device may perform signal processing on the eighth signal, to obtain the third signal. Then, the third terminal device sends the third signal to the network device on the second resource element, where the fourth resource element and the second resource element at least partially overlap or are adjacent to each other. Further, the network device receives the fourth signal on the second resource element, where the fourth signal is formed after the third signal sent by the third terminal device is processed by the uplink air interface channel corresponding to the second resource element. Still further, the network device performs the signal processing on the fourth signal, to obtain the first beamforming BF weight, where the operation amount of the signal processing is less than the operation amount of the matrix inversion or the matrix decomposition, and the first BF weight is used by the network device to send the downlink data to the second terminal device.

It should be understood that, when determining that the current transmission mode is MU-MIMO, the network device may further use, as the first signal, the single-user SU-BF weight corresponding to the first terminal device, and send the first signal to the second terminal device on a resource element agreed with the second terminal device. Similarly, the second terminal device may receive the second signal on an agreed resource. In other words, the network device and the second terminal device may perform the procedure shown in FIG. 2, to obtain the first BF weight. The first BF weight is also the MU-BF weight, and the first weight is used by the network device to perform weighted sending on the downlink data when the network device sends the downlink data to the first terminal device.

Therefore, in this embodiment of this application, an initial random signal or the precoding weight is used as a sending signal and sent on a specific resource element RE based on processing of a channel, and a downlink SU-BF weight or a downlink MU-BF weight is obtained through impact of the channel on the signal in a signal sending process, to equivalently implement calculation of a conventional baseband, so that the baseband does not need to calculate matrix decomposition or inversion in an antenna dimension, and calculation complexity of the baseband can be reduced.

In another aspect, in this embodiment of this application, an initial random signal or the precoding weight is used as a sending signal, and a precoding weight for downlink sending can be obtained without a need to define a dedicated pilot such as a sounding reference signal (sounding reference signal, SRS). Therefore, resources can be saved.

It should be understood that, during actual application, to improve accuracy of the precoding weight, the receiving end still needs to perform a small amount of operation processing on the received signal, to obtain a true precoding weight for subsequent data transmission. However, the small amount of operation is only a low-complexity operation such as addition, subtraction, multiplication, or division of some scalars and/or vectors, and does not involve a high-complexity operation such as matrix decomposition or inversion. Therefore, calculation complexity of the baseband can be greatly reduced.

In a possible implementation, the method further includes: The first terminal device may send second request information to the network device, where the second request message requests the network device to send the first signal and/or determine the first BF weight. In other words, the first terminal device may request the network device to start an air interface calculation mode, and in subsequent information exchange, the first terminal device and the network device may start to obtain the precoding weight by using an air interface calculation method.

In a possible implementation, the method further includes: The network device may include second indication information in a physical downlink control channel (Physical Downlink Control Channel, PDCCH), or send semi-static signaling to the first terminal device, where the semi-static signaling includes the second indication information, and the second indication information indicates the first terminal device to receive the second signal and/or determine the third signal. The second signal is formed after the first signal is processed by the downlink air interface channel, the third signal is obtained based on the signal processing performed on the second signal, and the operation amount of the signal processing is less than the operation amount of the matrix inversion or the matrix decomposition. In other words, the network device may determine, based on an actual situation or based on a request of the first terminal device, to start the air interface calculation mode, and notify, by using the second indication information, the first terminal device to start to obtain the precoding weight through air interface calculation in subsequent information exchange. After receiving the second indication information, the first terminal device starts the air interface calculation mode. To be specific, the first terminal device may receive the second signal, determine the third signal based on the second signal, and send the third signal to the network device on the second resource element.

Therefore, in this embodiment of this application, both the network device and the terminal device may determine, based on an actual situation, whether to start the air interface calculation mode.

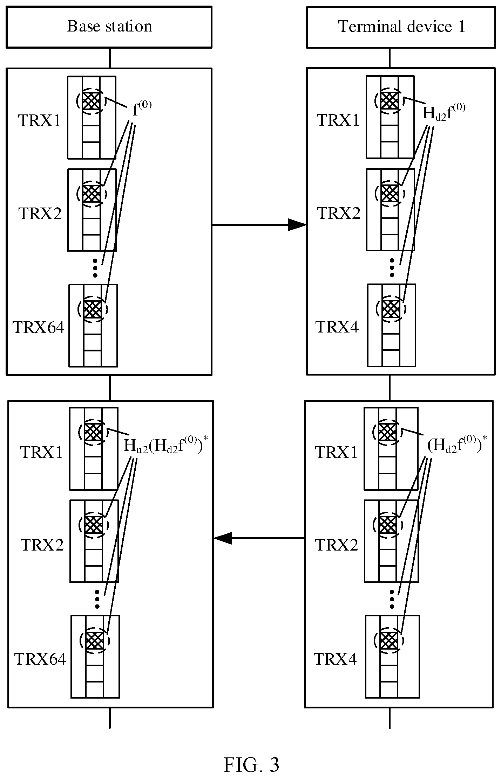

In a possible implementation, the first signal sent by the network device may be the random signal or the SU-BF weight used when the network device sends the downlink data to the first terminal device on the first resource element or the second resource element last time, and the first BF weight obtained by the network device may be the single-user SU-BF weight used when the network device currently sends the downlink data to the first terminal device. For example, the network device and the first terminal device may perform a procedure shown in FIG. 3, to obtain the SU-BF weight, and then send the downlink data to the first terminal device by using the SU-BF weight.

FIG. 3 is a schematic flowchart of another communication method according to an embodiment of this application. The method in FIG. 3 may be performed by the system in FIG. 1, and the method shown in FIG. 3 may be used to obtain a downlink SU-BF weight.

In FIG. 3, TRXx represents an $x^{th}$ transceiver antenna. For example, TRX2 of a base station (an example of a network device) represents a second transceiver antenna of the base station, and TRX4 of a terminal device 1 (an example of a first terminal device) represents a fourth transceiver antenna of the terminal device 1. In FIG. 3, only an example in which the base station has 64 transceiver antennas and the terminal device 1 has four transceiver antennas is used for description. However, in this embodiment of this application, a quantity of antennas of the network device is not limited, and a quantity of antennas of the terminal device is not limited either.

Each small box in FIG. 3 represents a resource element RE. In the figure, an example in which five resource elements REs are reserved for each antenna is used. In FIG. 3, the resource elements of each antenna from top to bottom are respectively denoted as an RE 1, an RE 2, an RE 3, an RE 4, and an RE 5, downlink air interface transmission channels corresponding to the RE 1 to the RE 5 are respectively denoted as $H_{d1}$, $H_{d2}$, $H_{d3}$, $H_{d4}$, and $H_{d5}$, and uplink air interface transmission channels corresponding to the RE 1 to the RE 5 are respectively denoted as: $H_{u1}$, $H_{u2}$, $H_{u3}$, $H_{u4}$, and $H_{u5}$. That is, a downlink air interface channel corresponding to a resource element, namely, the RE 2, in a shadow part in the figure is $H_{d2}$, and an uplink air interface channel corresponding to the resource element, namely, the RE 2, in the shadow part in the figure is $H_{u2}$.

In FIG. 3, the base station and the terminal device 1 agree that the RE 2 (an example of a first resource element, or an example of a second resource element) is a resource for air interface calculation. The base station and the terminal device 1 specifically agree that a resource element position used for air interface calculation may be determined by the base station, or may be determined by the terminal device 1. For a method for agreeing, by the base station and the terminal device 1, on the resource used for air interface calculation, refer to the foregoing step S210.

After the base station and the terminal device 1 agree that the RE 2 is used as a resource element for air interface calculation, the base station may select an initial random signal $f^{(0)}$ (an example of a first signal), and send the initial random signal $f^{(0)}$ on the RE 2. For example, for a base station with 64 radio frequency channels, a 64*1 all-1 vector may be sent as the first signal. That is, 1 is sent on the RE 2 of each channel. Alternatively, the base station may use, as the first signal $f^{(0)}$, an SU-BF weight (instead of the all-"1" vector) used when the base station sends downlink data to the first terminal device on the first resource element or the second resource element last time. In this way, iteration convergence can be accelerated.

After the first signal $f^{(0)}$ is sent, after being processed by the downlink air interface channel $H_{d2}$, a signal received by the terminal device 1 is $H_{d2}f^{(0)}$ (an example of a second signal).

The terminal device 1 may perform a conjugate operation on the signal, to obtain $(H_{d2}f^{(0)})^*$. The terminal device 1 may use the result as a second BF weight to perform weighted sending on uplink data when sending the data to the network device, or may use the weight (an example of a third signal) as the third signal, and continue to send the third signal to the base station on the RE 2.

After the third signal $(H_{d2}^{(0)})^*$ is sent, after being processed by the uplink air interface channel $H_{u2}$, a signal received by the base station is $H_{u2}(H_{d2}f^{(0)})^*$ (an example of a fourth signal).

The base station performs the conjugate operation on the received fourth signal $H_{u2}(H_{d2}f^{(0)})^*$ to obtain $(H_{u2}(H_{d2}f^{(0)})^*)^*$. The base station may use the result as a single-user SU-BF weight (an example of a first BF weight) used by the base station for downlink sending to the terminal device 1, and then the base station may send the downlink data to the terminal device 1 by using the SU-BF weight.

Therefore, in this embodiment of this application, a signal is sent on a specific resource element RE based on processing of a channel, and an SU-BF weight for downlink data is obtained through impact of the channel on the signal in a process of sending the signal on the channel, to equivalently implement calculation of a conventional baseband, so that the baseband does not need to calculate matrix decomposition in an antenna dimension, and calculation complexity of the baseband can be reduced.

In a possible implementation, when the base station and the terminal device 1 perform air interface calculation, an RE (the first resource element) used by the base station to send a signal and an RE (the second resource element) used by the terminal device 1 to send a signal may alternatively be REs that have adjacent positions. For example, the base station may send the first signal to the UE on the RE 2. However, in this case, the RE 2 of the terminal device 1 is occupied by another more important reference signal. In this case, the terminal device 1 may send the third signal to the base station by using the RE 3, and then the base station obtains the single-user SU-BF weight (an example of the first BF weight) for downlink sending to the terminal device 1. Because channels of adjacent REs are close, in this manner, when an RE at a same position on a peer side is occupied, air interface calculation can be performed in time and smoothly.

It should be understood that FIG. 3 is described by using only an example in which the terminal device 1 performs the conjugate operation on the second signal, to obtain the second BF weight. However, in an actual communication process, that the terminal device 1 determines the second BF weight based on the second signal may include an operation other than the conjugate operation performed on the second signal, for example, a normalization operation, and a final calculation result is used as the second BF weight. Similarly, FIG. 3 is described by using only an example in which the base station performs the conjugate operation on the fourth signal, to obtain the first BF weight. However, in an actual communication process, that the base station determines the first BF weight based on the fourth signal may include an operation other than the conjugate operation performed on the fourth signal, for example, a normalization operation, and a final calculation result is used as the first BF weight. However, regardless of the conjugate operation or the normalization operation, complexity of this type of mathematical operation is far less than operation complexity of matrix decomposition and matrix inversion.

It should be understood that a specific signal processing algorithm in this embodiment of this application is merely an example for description, and is not intended to limit the communication method in this application.

It should be understood that the RE 2 (an example of the first resource element) is used as an example for description in FIG. 3. However, a specific position of the first resource element is not limited in this application.

It should be understood that, in FIG. 3, one resource element is used as a precoding granularity. However, in an actual application process, a person skilled in the art may alternatively select two or more REs as the precoding granularity based on the method in this application, in other words, use two or more REs as the first resource element or the second resource element.

Therefore, the network device and each of a plurality of terminal devices may perform the procedure shown in FIG. 3, to obtain an SU-BF weight of the terminal device. When the network device obtains the SU-BF weight of each user equipment, if multi-user MU BF further needs to be performed, according to a conventional technology, the network device may select SU BF weights of all paired users, and combine the weights to perform orthogonalization once, to obtain an MU-BF weight.

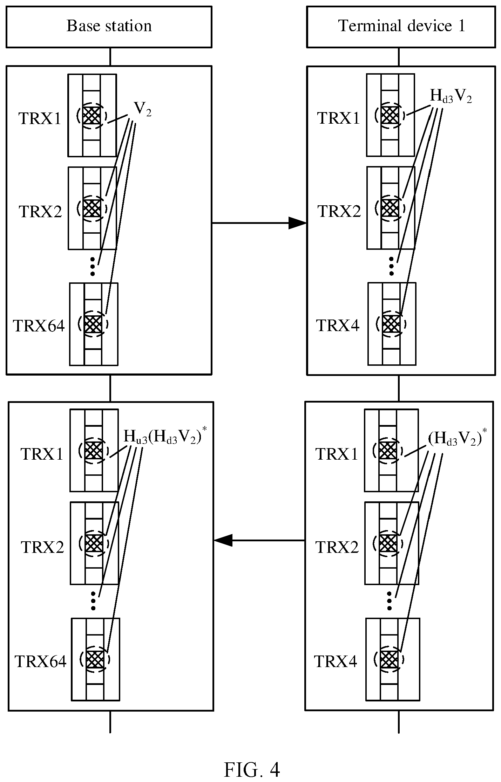

In a possible implementation, it is assumed that the base station (an example of the network device) obtains an SU-BF weight $V_1$ for downlink sending to the terminal device 1 (an example of the first terminal device), and obtains an SU-BF weight $V_2$ for downlink sending to a terminal device 2 (an example of a second terminal device). The network device and the first terminal device may perform a procedure shown in FIG. 4 to implement orthogonalization, to be specific, obtain an MU-BF weight used by the network device for downlink sending to the second terminal device, and then send the downlink data to the second terminal device by using the MU-BF weight.

It should be understood that the network device and the terminal device may perform the procedure shown in FIG. 2 or FIG. 3, to obtain $V_1$ and/or $V_2$, or may obtain $V_1$ and/or $V_2$ by using a method in the conventional technology. This is not limited in this application.

FIG. 4 is a schematic flowchart of another communication method according to an embodiment of this application. The method in FIG. 4 may be performed by the system in FIG. 1, and the method shown in FIG. 4 may be used to obtain an MU-BF weight of a sending end.

In FIG. 4, TRXx represents an xth transceiver antenna. For example, TRX2 of a base station (an example of a network device) represents a second transceiver antenna of the base station, and TRX4 of a terminal device 1 (an example of a first terminal device) represents a fourth transceiver antenna of the terminal device 1. In FIG. 4, only an example in which the base station has 64 transceiver antennas and the terminal device 1 has four transceiver antennas is used for description. However, in this embodiment of this application, a quantity of antennas of the network device is not limited, and a quantity of antennas of the terminal device is not limited either.

Each small box in FIG. 4 represents a resource element RE. In the figure, an example in which five resource elements REs are reserved for each antenna is used. In FIG. 4, the resource elements of each antenna from top to bottom are respectively denoted as an RE 1, an RE 2, an RE 3, an RE 4, and an RE 5, downlink air interface transmission channels corresponding to the RE 1 to the RE 5 are respectively denoted as $H_{d1}$, $H_{d2}$, $H_{d3}$, $H_{d4}$, and $H_{d5}$, and uplink air interface transmission channels corresponding to the RE 1 to the RE 5 are respectively denoted as: $H_{u1}$, $H_{u2}$, $H_{u3}$, $H_{u4}$, and $H_{u5}$. That is, a downlink air interface channel corresponding to a resource element, namely, the RE 3, in a shadow part in the figure is $H_{d3}$, and an uplink air interface channel corresponding to the resource element, namely, the RE 3, in the shadow part in the figure is $H_{u3}$.

In FIG. 4, the base station and the terminal device 1 agree that the RE 3 (another example of a first resource element or a second resource element) is a resource for air interface calculation. The base station and the terminal device 1 specifically agree that a resource element position used as the resource for air interface calculation may be determined by the base station, or may be determined by the terminal device 1. For a method for agreeing, by the base station and the terminal device 1, on the resource used for air interface calculation, refer to the foregoing step S210.

After the base station and the terminal device 1 agree on using the RE 3 as the resource for air interface calculation, the base station may use, as a first signal, a downlink single-user SU-BF weight $V_2$ (another example of the first signal) corresponding to a terminal device 2 (an example of a second terminal device), and send the signal $V_2$ on the RE 3.

After the first signal $V_2$ is sent, after being processed by the downlink air interface channel $H_{d3}$, a signal received by the terminal device 1 is $H_{d3}V_2$ (another example of a second signal).

The terminal device 1 may perform a conjugate operation on the signal, to obtain $(H_{d3}V_2)^*$. The terminal device 1 may use the result as a second BF weight to perform weighted sending on uplink data when sending the data to the network device, or may use the result (another example of a third signal) as the third signal, and continue to send the third signal to the base station on the RE 3.

After the third signal $(H_{d3}V_2)^*$ is sent, after being processed by the uplink air interface channel $H_{u3}$, a signal received by the base station is $H_{u3}(H_{d3}V_2)^*$ (another example of a fourth signal).

The base station performs the conjugate operation on the received signal $H_{u3}(H_{d3}V_2)^*$, to obtain $(H_{u3}(H_{d3}V_2^*))^*$. $H_{u3}$ and $H_{d3}$ are channel matrices for communication between the base station and the terminal device 1, and $V_1$ is an SU-BF weight used by the base station to send downlink data to the terminal device 1. It can be learned, according to a singular value decomposition principle, that right singular value matrices of $V_1$ and $H_{d3}$ are the same or similar. Therefore, $(H_{u3}(H_{d3}V_2^*))^*$ obtained through calculation is basically close to $V_1V_1^HV_2$. The base station only needs to perform vector subtraction, to obtain the first BF weight according to $w\_mu2=(I-V_1V_1^H)V_2=V_2-V_1V_1^HV_2$, and uses the weight as a multi-user MU-BF weight used by the base station for downlink sending to the terminal device 2. Then, the base station may send the downlink data to the terminal device 2 by using the MU-BF weight. That is, orthogonalization can be equivalently implemented by using this calculation method.

Therefore, in this embodiment of this application, a signal is sent on a specific resource element RE based on processing of a channel, and an MU-BF weight for downlink data is obtained through impact of the channel on the signal in a process of sending the signal on the channel, to equivalently implement calculation of a conventional baseband, so that the baseband does not need to calculate matrix decomposition or matrix inversion in an antenna dimension, and calculation complexity of the baseband can be reduced.

It should be understood that the base station and the terminal device 2 may alternatively perform a procedure similar to that in FIG. 4, to obtain a multi-user MU-BF weight w_mu1 used by the base station for downlink sending to the terminal device 1. In this case, the base station (an example of the network device) may use, as the first signal, a single-user SU-BF weight $V_1$ for downlink sending to the terminal device 1 (another example of the second terminal device), and send the first signal to the terminal device 2 (an example of the first terminal device) on the RE 4 (another example of the first resource element). The terminal device 2 receives the first signal on the RE 4, and then the base station and the terminal device 1 finally obtain, with reference to a procedure similar to that in FIG. 4, the multi-user MU-BF weight w_mu1 (another example of the first BF weight) used by the base station for downlink sending to the terminal device 1. For a specific process, refer to the foregoing descriptions. Details are not described herein again.

It should be understood that, if the SU-BF weight is obtained before the MU-BF weight is obtained according to the method in this application, resource elements used to obtain the SU-BF weight and the MU-BF weight may be resource elements REs at a same position, or may be REs at adjacent positions, or may be REs at non-adjacent positions. This is not limited in this application.

In a possible implementation, a resource element used by the base station and the terminal device 1 to obtain $V_1$ and a resource element used by the base station and the terminal device 2 to obtain w_mu1 may be resource elements at adjacent positions, and a resource element used by the base station and the terminal device 2 to obtain $V_2$ and a resource element used by the base station and the terminal device 1 to obtain w_mu2 may be resource elements at adjacent positions. For example, the base station and the terminal device 1 may obtain $V_1$ through air interface calculation by using the RE 2, and the base station and the terminal device 2 may obtain $V_2$ through air interface calculation by using the RE 3. Then, the base station and the terminal device 1 may obtain w_mu2 through air interface calculation by using the RE 2, and the base station and the terminal device 2 may obtain w_mu1 through air interface calculation by using the RE 3.

In a possible implementation, the resource element used by the base station and the terminal device 1 to obtain $V_1$, the resource element used by the base station and the terminal device 2 to obtain $V_2$, the resource element used by the base station and the terminal device 1 to obtain w_mu2, and the resource element used by the base station and the terminal device 2 to obtain w_mu1 may all be resource elements at a same position, but calculation operations are performed in different downlink subframes (subframes) or transmission time intervals (transmission time intervals, TTIs). For example, the base station and the terminal device 1 may obtain $V_1$ through air interface calculation by using the RE 2 in a subframe 1, and the base station and the terminal device 2 may obtain $V_2$ through air interface calculation by using the RE 2 in a subframe 22. Then, the base station and the terminal device 1 may obtain w_mu2 through air interface calculation by using the RE 2 in a subframe 45, and the base station and the terminal device 2 may obtain w_mu1 through air interface calculation by using the RE 2 in a subframe 58. According to this method, higher MU precoding accuracy can be achieved while SU precoding and MU precoding at an RE granularity are implemented.

It should be understood that FIG. 4 is described by using only an example in which the terminal device 1 performs the conjugate operation on the second signal, to obtain the second BF weight. However, in an actual communication process, that the terminal device 1 determines the second BF weight based on the second signal may include an operation other than the conjugate operation performed on the second signal, for example, a normalization operation, and a final calculation result is used as the second BF weight. Similarly, FIG. 4 is described by using only an example in which the base station performs the conjugate operation on the fourth signal, to obtain the first BF weight. However, in an actual communication process, that the base station determines the first BF weight based on the fourth signal may include an operation other than the conjugate operation performed on the fourth signal, for example, a normalization operation, and a final calculation result is used as the first BF weight. A specific signal processing algorithm in this embodiment of this application is merely an example for description, and is not intended to limit the communication method in this application.

It should be understood that, in FIG. 4, an example in which the base station and the terminal device 1 agree that the RE 3 (an example of the first resource element) is a resource for air interface calculation is used for description. However, a specific position of the first resource element is not limited in this application.

It should be understood that, in FIG. 4, one resource element is used as a precoding granularity. However, in an actual application process, a person skilled in the art may alternatively select two or more REs as the precoding granularity based on the method in this application.

It should be understood that, during actual application, if data sent by the network device to user equipment is single-stream data, an obtained precoding weight is a vector; or if the data sent by the network device to user equipment is multi-stream data, a precoding weight is a matrix. For example, it is assumed that a current transmission mode is MU-MIMO in which two UEs are paired. If each UE has two data streams, and there are four data streams in total, the two data streams correspond to two columns of weights of each UE, and the four data streams may be transmitted over an air interface, to obtain MU-BF weights.

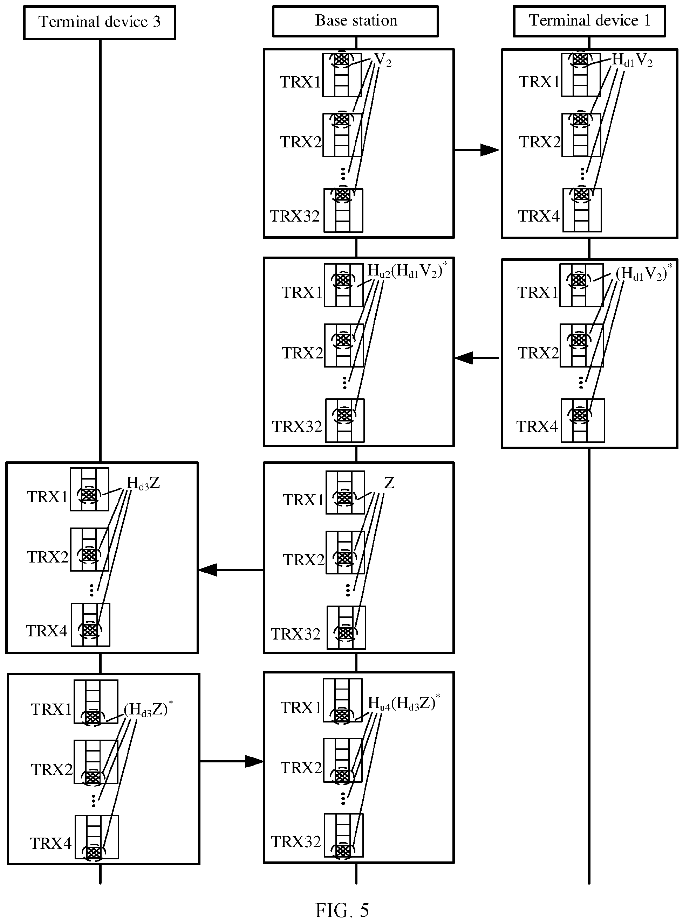

In a possible implementation, it is assumed that the base station (an example of the network device) determines that the current transmission mode is MU-MIMO, and there are three pieces of paired user equipment. The base station obtains an SU-BF weight $V_1$ for downlink sending to the terminal device 1 (an example of the first terminal device), an SU-BF weight $V_2$ for downlink sending to the terminal device 2 (an example of the second terminal device), and an SU-BF weight $V_3$ for downlink sending to a terminal device 3 (an example of a third terminal device). The base station, the terminal device 1, and the terminal device 3 may perform a procedure shown in FIG. 5 to implement orthogonalization, to be specific, obtain an MU-BF weight used by the base station for downlink sending to the terminal device 2, and then send the downlink data to the terminal device 2 by using the MU-BF weight.

It should be understood that the base station and each of the terminal device 1, the terminal device 2, and the terminal device 3 may perform the procedure shown in FIG. 2 or FIG. 3, to obtain each of $V_1$, $V_2$, and $V_3$, or may obtain each of $V_1$, $V_2$, and $V_3$ by using a method in the conventional technology. This is not limited in this application.

FIG. 5 is a schematic flowchart of another communication method according to an embodiment of this application. The method in FIG. 5 may be performed by the system in FIG. 1, and the method shown in FIG. 5 may be used to obtain an MU-BF weight of a sending end.

In FIG. 5, TRXx represents an $x^{th}$ transceiver antenna. For example, TRX2 of a base station (an example of a network device) represents a second transceiver antenna of the base station, and TRX1 of a terminal device 1 (an example of a first terminal device) represents a first transceiver antenna of the terminal device 1. In FIG. 5, only an example in which the base station has 32 transceiver antennas, the terminal device 1 has four transceiver antennas, and a terminal device 3 has four transceiver antennas is used for description. However, in this embodiment of this application, a quantity of antennas of the network device is not limited, and a quantity of antennas of the terminal device is not limited either.

Each small box in FIG. 5 represents a resource element RE. In the figure, an example in which four resource elements REs are reserved for each antenna is used. In FIG. 5, the resource elements of each antenna from top to bottom are respectively denoted as an RE 1, an RE 2, an RE 3, and an RE 4, downlink air interface transmission channels corresponding to the RE 1 to the RE 4 are respectively denoted as $H_{d1}$, $H_{d2}$, $H_{d3}$, and $H_{d4}$, and uplink air interface transmission channels corresponding to the RE 1 to the RE 4 are respectively denoted as: $H_{u1}$, $H_{u2}$, $H_{u3}$, and $H_{u4}$.

In FIG. 5, the base station and the terminal device 1 agree that the RE 1 (another example of a first resource element) and the RE 2 (an example of a third resource element) are resources for air interface calculation. The base station and the terminal device 1 specifically agree that a resource element position used as the first resource element or the second resource element may be determined by the base station, or may be determined by the terminal device 1. For a method for agreeing, by the base station and the terminal device 1, on a resource element used for air interface calculation, refer to the foregoing step S210.

After the base station and the terminal device 1 agree on the resource for air interface calculation, the base station may use, as a first signal, a downlink single-user SU-BF weight $V_2$ (another example of the first signal) corresponding to a terminal device 2 (an example of a second terminal device), and send the signal $V_2$ on the RE 1.

After the first signal $V_2$ is sent, after being processed by the downlink air interface channel $H_{d1}$ on which the RE 1 is located, a signal received by the terminal device 1 is $H_{d1}V_2$ (another example of a second signal).

The terminal device 1 may perform a conjugate operation on the signal, to obtain $(H_{d1}V_2)^*$. The terminal device 1 may use the signal as a seventh signal, and send the seventh signal to the base station on the RE 2.

After the seventh signal $(H_{d3}V_2)^*$ is sent, after being processed by the uplink air interface channel $Hu_2$ on which the RE 2 is located, a signal received by the base station is $H_{u2}(H_{d1}V_2)^*$ (an example of a fifth signal).

The base station performs the conjugate operation on the received signal $H_{u2}(H_{d1}V_2)^*$, to obtain $(H_{u2}(H_{d1}V_2)^*)^*$. $H_{u2}$ is adj acent to $H_{d1}$, $H_{d1}$ is a channel matrix for communication between the base station and the terminal device 1, and $V_1$ is an SU-BF weight used by the base station to send downlink data to the terminal device 1. Therefore, $(H_{u2}(H_{d1}V_2)^*)^*$ obtained through calculation is approximate to $V_1V_1^HV_2$. The base station may further calculate $Z=(I-V_1V_1^H)V_2=V_2-V_1V_1^HV_2$.

The base station may use Z as a sixth signal, and send the sixth signal to the terminal device 3 on the resource element RE 3 (an example of a fourth resource element) agreed with the terminal device 3.

After the sixth signal Z is sent, after being processed by the downlink air interface channel $H_{d3}$ on which the RE 3 is located, a signal received by the terminal device 3 is $H_{d3}Z$ (an example of an eighth signal).

The terminal device 3 may perform the conjugate operation on the signal, to obtain $(H_{d3}Z)^*$. The terminal device 1 may use the signal as a third signal, and send the third signal to the base station on the RE 4 (another example of the second resource element) agreed with the base station.

After the third signal $(H_{d3}Z)^*$ is sent, after being processed by the uplink air interface channel $H_{u4}$, a signal received by the base station is $H_{u4}(H_{d3}Z)^*$ (an example of a fourth signal).

The base station performs the conjugate operation on the received signal $H_{u4}(H_{d3}Z)^*$, to obtain $(H_{u4}(H_{d3}Z)^*)^*$. $H_{u4}$ is adjacent to $H_{d3}$, $H_{d3}$ is a channel matrix for communication between the base station and the terminal device 3, and $V_3$ is an SU-BF weight used by the base station to send the downlink data to the terminal device 3. Therefore, $(H_{u4}(H_{d3}Z)^*)^*$ obtained through calculation is approximate to $V_3V_3^HZ$. The base station may further obtain, through calculation, $w\_mu2=Z-V_3V_3^HZ$, namely, an MU-BF weight (another example of a first BF weight), and use the weight as a multi-user MU-BF weight used by the base station for downlink sending to the terminal device 2. Then, the base station may send the downlink data to the terminal device 2 by using the MU-BF weight. That is, orthogonalization can be equivalently implemented by using this calculation method.

Therefore, in this embodiment of this application, a signal is sent on a specific resource element RE based on processing of a channel, and an MU-BF weight for downlink data is obtained through impact of the channel on the signal in a process of sending the signal on the channel, to equivalently implement calculation of a conventional baseband, so that the baseband does not need to calculate matrix decomposition or matrix inversion in an antenna dimension, and calculation complexity of the baseband can be reduced.

It should be understood that in the method shown in FIG. 5, the base station may alternatively first perform air interface transmission with the terminal device 3, and then perform air interface transmission with the terminal device 1. When three or more UEs are involved, an interaction sequence is not limited in this application.

It should be understood that the base station may alternatively use $V_1$ as the first signal, and perform a procedure similar to that in FIG. 5 with the terminal device 2 and the terminal device 3, to obtain a multi-user MU-BF weight w_mu1 used by the base station for downlink sending to the terminal device 1. The base station may alternatively use $V_3$ as the first signal, and perform a procedure similar to that in FIG. 5 with the terminal device 1 and the terminal device 2, to obtain a multi-user MU-BF weight w _mu3 used by the base station for downlink sending to the terminal device 3.

It should be understood that, in the foregoing air interface calculation process, adjacent resource elements are used as an example for description. However, during actual application, a same resource element or partially overlapping resource elements may also be used.

It should be understood that the method in this application may also be extended to air interface calculation of a plurality of network devices and a plurality of terminal devices. A quantity of network devices and a quantity of terminal devices are not limited in this application.

It should be understood that in the MU-BF calculation process in this embodiment of this application, for the terminal device 3, the eighth signal received by the terminal device 3 may also be referred to as the second signal. For the terminal device 1, the seventh signal sent by the terminal device 1 may also be referred to as the third signal. In various embodiments of this application, first, second, and various numbers are merely used for distinguishing for ease of description, for example, distinguishing between different signals or indication information, and are not used to limit the scope of embodiments of this application.

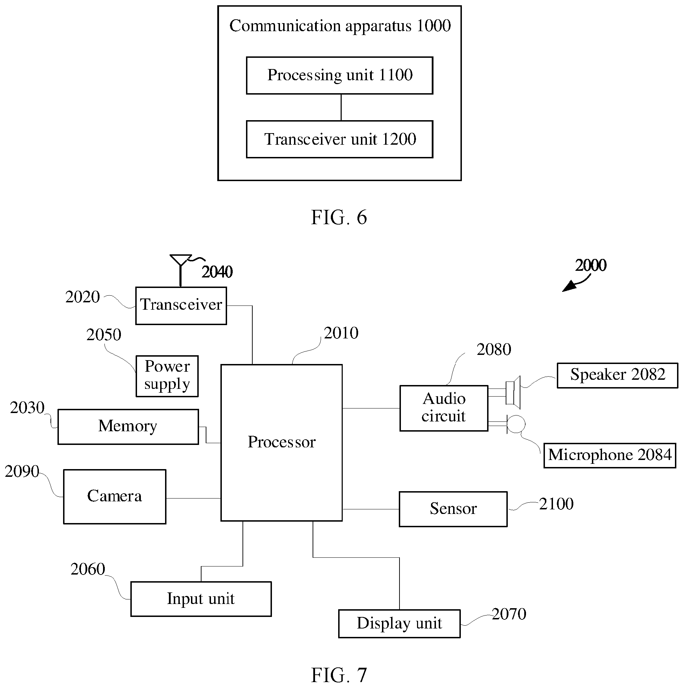

The method provided in embodiments of this application is described above in detail with reference to FIG. 2 to FIG. 5. Apparatuses provided in embodiments of this application are described below in detail with reference to FIG. 6 to FIG. 8.

FIG. 6 is a schematic block diagram of a communication apparatus according to an embodiment of this application. As shown in FIG. 6, the communication apparatus 1000 may include a processing unit 1100 and a transceiver unit 1200.

In a possible design, the communication apparatus 1000 may correspond to the network device in the foregoing method embodiments, for example, may be a network device or a component (for example, a chip or a chip system) configured in the network device.

It should be understood that the communication apparatus 1000 may correspond to the network device in the method 200 according to embodiments of this application, and the communication apparatus 1000 may include a unit configured to perform the method performed by the network device in the method 200 in FIG. 2. In addition, the units in the communication apparatus 1000 and the foregoing other operations and/or functions are separately intended to implement corresponding procedures of the method 200 in FIG. 2.

When the communication apparatus 1000 is configured to perform the method 200 in FIG. 2, the processing unit 1100 may be configured to perform step S280 in the method 200, and the transceiver unit 1200 may be configured to perform step S210, step S270, and step S290 in the method 200. It should be understood that a specific process in which the units perform the foregoing corresponding steps is described in detail in the foregoing method embodiments, and for brevity, details are not described herein.

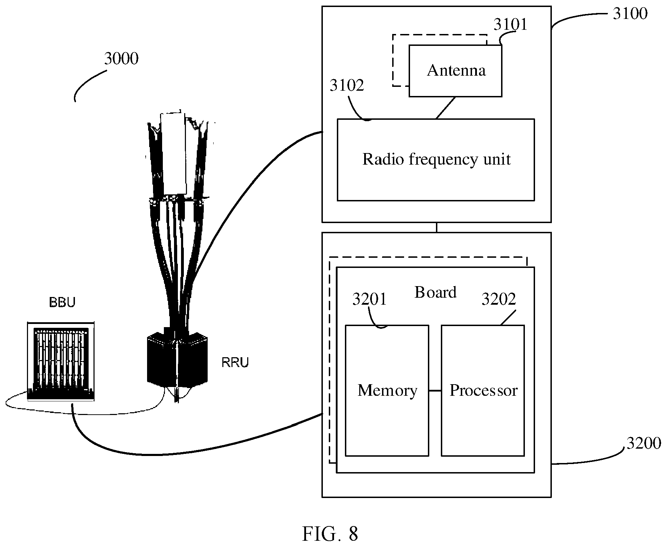

It should be further understood that, when the communication apparatus 1000 is the network device, the transceiver unit 1200 in the communication apparatus 1000 may be implemented by using a transceiver, for example, may correspond to a transceiver 3200 in a network device 3000 shown in FIG. 8. The processing unit 1100 in the communication apparatus 1000 may be implemented by using at least one processor, for example, may correspond to a processor 3100 in the network device 3000 shown in FIG. 8.

It should be further understood that when the communication apparatus 1000 is the chip or the chip system configured in the network device, the transceiver unit 1200 in the communication apparatus 1000 may be implemented by an input/output interface, and the processing unit 1100 in the communication apparatus 1000 may be implemented by a processor, a microprocessor, an integrated circuit, or the like integrated in the chip or the chip system.

In another possible design, the communication apparatus 1000 may correspond to the terminal device in the foregoing method embodiments, for example, may be a terminal device or a component (for example, a chip or a chip system) configured in the terminal device.

It should be understood that the communication apparatus 1000 may correspond to the terminal device in the method 200 according to embodiments of this application, and the communication apparatus 1000 may include a unit configured to perform the method performed by the terminal device in the method 200 in FIG. 2. In addition, the units in the communication apparatus 1000 and the foregoing other operations and/or functions are separately intended to implement corresponding procedures of the method 200 in FIG. 2.

When the communication apparatus 1000 is configured to perform the method 200 in FIG. 2, the processing unit 1100 may be configured to perform step S240 in the method 200, and the transceiver unit 1200 may be configured to perform step S230 and step S250 in the method 200. It should be understood that a specific process in which the units perform the foregoing corresponding steps is described in detail in the foregoing method embodiments, and for brevity, details are not described herein.

It should be further understood that, when the communication apparatus 1000 is the terminal device, the transceiver unit 1200 in the communication apparatus 1000 may be implemented by using a transceiver, for example, may correspond to a transceiver 2020 in a terminal device 2000 shown in FIG. 7. The processing unit 1100 in the communication apparatus 1000 may be implemented by using at least one processor, for example, may correspond to a processor 2010 in the terminal device 2000 shown in FIG. 6.

It should be further understood that when the communication apparatus 1000 is the chip or the chip system configured in the terminal device, the transceiver unit 1200 in the communication apparatus 1000 may be implemented by an input/output interface, and the processing unit 1100 in the communication apparatus 1000 may be implemented by a processor, a microprocessor, an integrated circuit, or the like integrated in the chip or the chip system.

FIG. 7 is a schematic diagram of a structure of a terminal device 2000 according to an embodiment of this application. The terminal device 2000 may be used in the system shown in FIG. 1, to perform functions of the terminal device in the foregoing method embodiments. As shown in the figure, the terminal device 2000 includes a processor 2010 and a transceiver 2020. Optionally, the terminal device 2000 further includes a memory 2030. The processor 2010, the transceiver 2002, and the memory 2030 may communicate with each other through an internal connection path, to transfer a control signal and/or a data signal. The memory 2030 is configured to store a computer program. The processor 2010 is configured to invoke the computer program from the memory 2030 and run the computer program, to control the transceiver 2020 to send and receive a signal. Optionally, the terminal device 2000 may further include an antenna 2040, configured to send, by using a radio signal, uplink data or uplink control signaling output by the transceiver 2020.

The processor 2010 and the memory 2030 may be integrated into one processing apparatus. The processor 2010 is configured to execute program code stored in the memory 2030, to implement the foregoing functions. During specific implementation, the memory 2030 may alternatively be integrated into the processor 2010, or may be independent of the processor 2010. The processor 2010 may correspond to the processing unit 1100 in FIG. 6.

The transceiver 2020 may correspond to the transceiver unit 1200 in FIG. 6, and may also be referred to as a transceiver unit. The transceiver 2020 may include a receiver (or referred to as a receiver machine or a receiver circuit) and a transmitter (or referred to as a transmitter machine or a transmitter circuit). The receiver is configured to receive a signal, and the transmitter is configured to send a signal.

It should be understood that the terminal device 2000 shown in FIG. 7 can implement the processes related to the terminal device in the method embodiment shown in FIG. 2. The operations and/or the functions of the modules in the terminal device 2000 are separately for implementing corresponding procedures in the foregoing method embodiment. For details, refer to the descriptions in the foregoing method embodiments. To avoid repetition, detailed descriptions are properly omitted herein.

The processor 2010 may be configured to perform an action that is described in the foregoing method embodiments and that is implemented inside the terminal device, for example, perform signal processing on a second signal, to obtain a third signal. The transceiver 2020 may be configured to perform an action that is described in the foregoing method embodiment and that is of sending by the terminal device to the network device or receiving by the terminal device from the network device, for example, sending the third signal, first request information, and second request information, and receiving the second signal, first indication information, and second indication information. For details, refer to the descriptions in the foregoing method embodiments. Details are not described herein again.

Optionally, the terminal device 2000 may further include a power supply 2050 configured to supply power to various components or circuits in the terminal device.

In addition, to make functions of the terminal device more perfect, the terminal device 2000 may further include one or more of an input unit 2060, a display unit 2070, an audio circuit 2080, a camera 2090, a sensor 2100, and the like, and the audio circuit may further include a speaker 2082, a microphone 2084, and the like.

FIG. 8 is a schematic diagram of a structure of a network device according to an embodiment of this application, for example, may be a schematic diagram of a structure of a base station. The base station 3000 may be used in the system shown in FIG. 1, to perform functions of the network device in the foregoing method embodiments. As shown in the figure, the base station 3000 may include one or more radio frequency units, for example, one or more remote radio units (remote radio units, RRUs) 3100, and one or more baseband units (BBUs) (which may also be referred to as distributed units (DUs)) 3200. The RRU 3100 may be referred to as a transceiver unit, and corresponds to the transceiver unit 1100 in FIG. 8. Optionally, the transceiver unit 3100 may also be referred to as a transceiver machine, a transceiver circuit, a transceiver, or the like, and may include at least one antenna 3101 and a radio frequency unit 3102. Optionally, the transceiver unit 3100 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The RRU 3100 is mainly configured to receive and send a radio frequency signal and perform conversion between the radio frequency signal and a baseband signal, for example, configured to send a first signal, first indication information, and second indication information to a terminal device, and receive a fourth signal, first request information, and second request information. For details, refer to the descriptions in the foregoing method embodiments. Details are not described herein again.

The BBU 3200 is mainly configured to perform baseband processing, control the base station, and the like. The RRU 3100 and the BBU 3200 may be physically disposed together, or may be physically disposed separately, that is, the base station is a distributed base station.

The BBU 3200 is a control center of the base station, and may also be referred to as a processing unit and correspond to the processing unit 1100 in FIG. 6. The BBU 3200 is mainly configured to implement a baseband processing function, for example, channel coding, multiplexing, modulation, and spreading. For example, the BBU (the processing unit) may be configured to control the base station to perform an operation procedure related to the network device in the foregoing method embodiment, for example, perform signal processing on the fourth signal, to obtain a first BF weight. For details, refer to the descriptions in the foregoing method embodiments. Details are not described herein again.

In an example, the BBU 3200 may include one or more boards, and a plurality of boards may jointly support a radio access network (for example, an LTE network) having a single access standard, or may separately support radio access networks (for example, the LTE network, a 5G network, or another network) having different access standards. The BBU 3200 further includes a memory 3201 and a processor 3202. The memory 3201 is configured to store necessary instructions and data. The processor 3202 is configured to control the base station to perform a necessary action, for example, is configured to control the base station to perform the operation procedure related to the network device in the foregoing method embodiment. The memory 3201 and the processor 3202 may serve one or more boards. In other words, a memory and a processor may be disposed on each board. Alternatively, a plurality of boards may share a same memory and a same processor. In addition, a necessary circuit may further be disposed on each board.

It should be understood that the base station 3000 shown in FIG. 8 can implement processes related to the network device in the method embodiment shown in FIG. 2. The operations and/or the functions of the modules in the base station 3000 are separately for implementing corresponding procedures in the foregoing method embodiment. For details, refer to the descriptions in the foregoing method embodiments. To avoid repetition, detailed descriptions are properly omitted herein.

The BBU 3200 may be configured to perform an action that is described in the foregoing method embodiments and that is implemented inside the network device, and the RRU 3100 may be configured to perform an action that is described in the foregoing method embodiments and that is of sending by the network device to the terminal device or receiving by the network device from the terminal device. For details, refer to the descriptions in the foregoing method embodiments. Details are not described herein again.

It should be understood that the base station 3000 shown in FIG. 8 is merely a possible form of the network device, and should not constitute any limitation on this application. The method provided in this application is applicable to a network device in another form. For example, the network device includes an AAU, and may further include a CU and/or a DU, or include a BBU and an adaptive radio unit (adaptive radio unit, ARU), or a BBU; or may be customer premise equipment (customer premise equipment, CPE), or in another form. A specific form of the network device is not limited in this application.

The CU and/or the DU may be configured to perform an action that is described in the foregoing method embodiments and that is implemented inside the network device, and the AAU may be configured to perform an action that is described in the foregoing method embodiments and that is of sending by the network device to the terminal device or receiving by the network device from the terminal device. For details, refer to the descriptions in the foregoing method embodiments. Details are not described herein again.

An embodiment of this application further provides a processing apparatus, including a processor and an interface. The processor is configured to perform the method in any one of the foregoing method embodiments.

It should be understood that, the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed and completed by using a hardware processor, or may be performed and completed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by using a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code. When the computer program code is run on a computer, the computer is enabled to perform the methods separately performed by the terminal device and the network device in the embodiment shown in FIG. 2.

According to the method provided in embodiments of this application, this application further provides a computer-readable medium. The computer-readable medium stores program code. When the program code is run on a computer, the computer is enabled to perform the methods separately performed by the terminal device and the network device in the embodiment shown in FIG. 2.

According to the method provided in embodiments of this application, this application further provides a system. The system includes the foregoing one or more terminal devices and the foregoing one or more network devices.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It should be understood that, in various embodiments of this application, first, second, and various numbers are merely used for distinguishing for ease of description, and are not used to limit the scope of embodiments of this application. For example, different signals or indication information is distinguished.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   sending, by a network device, a first signal to a first terminal device on a first resource element;
   receiving, by the network device, a fourth signal on a second resource element, wherein the second resource element and the first resource element at least partially overlap or are adjacent to each other; and
   sending, by the network device, downlink data by using a first beamforming BF weight, wherein the first BF weight is obtained based on signal processing performed on the fourth signal, and an operation amount of the signal processing is less than an operation amount of matrix inversion or matrix decomposition.

2. The method according to claim 1, wherein the first BF weight is used by the network device to send downlink data to the first terminal device,
   the first signal is a random signal or a downlink single-user SU-BF weight used when the network device sends downlink data to the first terminal device on the first resource element or the second resource element last time,
   the first BF weight is an SU-BF weight used when the network device currently sends downlink data to the first terminal device, and the first terminal device is a terminal device in a single-user multiple-input multiple-output SU-MIMO transmission mode.

3. The method according to claim 1, wherein the first BF weight is used by the network device to send downlink data to a second terminal device,
   the first signal is a downlink single-user SU-BF weight corresponding to the second terminal device, the first BF weight is a multi-user MU-BF weight, and the first terminal device and the second terminal device are terminal devices in a multi-user multiple-input multiple-output MU-MIMO transmission mode.

**4.** The method according to claim 3, wherein the method further comprises:

receiving, by the network device, a fifth signal on a third resource element, wherein the third resource element and the first resource element at least partially overlap or are adjacent to each other; and
sending, by the network device, a sixth signal to a third terminal device on a fourth resource element, wherein the fourth resource element and the second resource element at least partially overlap or are adjacent to each other, the sixth signal is obtained based on signal processing performed on the fifth signal, an operation amount of the signal processing is less than the operation amount of the matrix inversion or the matrix decomposition, the sixth signal is used by the network device to receive the fourth signal on the second resource element, and the first terminal device, the second terminal device, and the third terminal device are terminal devices in the MU-MIMO transmission mode.

**5.** The method according to any one of claims 1 to 4, wherein the signal processing comprises a conjugate operation and/or a normalization operation.

**6.** The method according to any one of claims 1 to 5, wherein the first resource element and the second resource element completely overlap.

**7.** The method according to any one of claims 4 to 6, wherein the first resource element and the third resource element completely overlap, and the second resource element and the fourth resource element completely overlap.

**8.** The method according to any one of claims 1 to 7, wherein the method further comprises:
receiving, by the network device, a first request message, wherein the first request message requests the network device to determine a position of the first resource element.

**9.** The method according to any one of claims 1 to 8, wherein the method further comprises:
sending, by the network device, first indication information, wherein the first indication information indicates the position of the first resource element or a position of the second resource element.

**10.** The method according to any one of claims 1 to 9, wherein the method further comprises:
receiving, by the network device, a second request message, wherein the second request message requests the network device to send the first signal and/or obtain the first BF weight.

**11.** The method according to any one of claims 1 to 9, wherein the method further comprises:
sending, by the network device, second indication information, wherein the second indication information indicates the first terminal device to receive a second signal and/or obtain a third signal, the second signal is formed after the first signal is processed by a downlink air interface channel, the third signal is obtained based on signal processing performed on the second signal, and an operation amount of the signal processing is less than the operation amount of the matrix inversion or the matrix decomposition.

**12.** The method according to any one of claims 1 to 11, wherein the first resource element or the second resource element comprises at least one resource element RE.

**13.** A communication method, comprising:

receiving, by a first terminal device, a second signal on a first resource element; and
sending, by the first terminal device, a third signal to a network device on a second resource element, wherein the second resource element and the first resource element at least partially overlap or are adjacent to each other, the third signal is obtained based on signal processing performed on the second signal, and an operation amount of the signal processing is less than an operation amount of matrix inversion or matrix decomposition.

**14.** The method according to claim 13, wherein the signal processing comprises a conjugate operation and/or a normalization operation.

**15.** The method according to claim 13 or 14, wherein the first resource element and the second resource element completely overlap.

**16.** The method according to any one of claims 13 to 15, wherein the method further comprises:
sending, by the first terminal device, a first request message, wherein the first request message requests the network device to determine a position of the first resource element.

**17.** The method according to any one of claims 13 to 16, wherein the method further comprises:
receiving, by the first terminal device, first indication information, wherein the first indication information indicates the position of the first resource element or a position of the second resource element.

**18.** The method according to any one of claims 13 to 17, wherein the method further comprises:
sending, by the first terminal device, a second request message, wherein the second request message requests the network device to send a first signal and/or obtain a first beamforming BF weight, the second signal is formed after the first signal is processed by a downlink air interface channel, and the first BF weight is used by the network device to send downlink data to the first terminal device or a second terminal device.

**19.** The method according to any one of claims 13 to 17, wherein the method further comprises:
receiving, by the first terminal device, second indication information, wherein the second indication information indicates the first terminal device to receive the second signal and/or obtain the third signal.

**20.** The method according to any one of claims 13 to 19, wherein the second signal is further used to determine a second BF weight, the second BF weight is used by the first terminal device to send uplink data to the network device, and the method further comprises:
determining, by the first terminal device, the second BF weight based on the second signal.

**21.** The method according to any one of claims 13 to 20, wherein the first resource element or the second resource element comprises at least one resource element RE.

**22.** A communication apparatus, comprising a unit configured to perform the method according to any one of claims 1 to 21.

**23.** A communication apparatus, comprising at least one processor, wherein the at least one processor is configured to execute a computer program stored in a memory, to enable the communication apparatus to implement the method according to any one of claims 1 to 21.

**24.** A computer-readable medium, comprising a computer program, wherein when the computer program is run on a computer, the computer is enabled to perform the method according to any one of claims 1 to 21.

100

FIG. 1

200

| Network device | First terminal device |
|---|---|

S210: Send a first signal on a first resource element

S220: The first signal becomes a second signal after being processed by a downlink air interface channel

S230: Receive the second signal on the first resource element

S240: Perform signal processing on the second signal, to obtain a third signal

S250: Send the third signal on a second resource element

S260: The third signal becomes a fourth signal after being processed by an uplink air interface channel

S270: Receive the fourth signal on the second resource element

S280: Perform signal processing on the fourth signal, to obtain a first BF weight

S290: Send downlink data by using the first BF weight

FIG. 2

FIG. 3

FIG. 4

FIG. 5

Communication apparatus 1000

Processing unit 1100

Transceiver unit 1200

FIG. 6

2000

2040

2020 Transceiver

2050

Power supply

2010

2080

Audio circuit

Speaker 2082

2030 Memory

Processor

Microphone 2084

2090 Camera

Sensor 2100

2060 Input unit

Display unit 2070

FIG. 7

FIG. 8

## INTERNATIONAL SEARCH REPORT

| International application No. |
|---|
| **PCT/CN2021/070605** |

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

H04W; H04L; H04B; H04Q

Documentation searched other than minimum documentation to the extent that such documents are included in the fields searched

Electronic data base consulted during the international search (name of data base and, where practicable, search terms used)

CNABS, CNTXT, VEN, DWPI, USTXT, WOTXT, EPTXT, IEEE, 3GPP: 波束赋形, 波束赋型, 波束成形, 波束成型, 预编码, 权值, 加权, 权重, 共轭, 信道矩阵, 上行, 下行, 分解, beamforming, BF, precoding, pre-coding, weight, conjugate, channel, matrix, uplink, downlink, decompos+

### C. DOCUMENTS CONSIDERED TO BE RELEVANT

| Category* | Citation of document, with indication, where appropriate, of the relevant passages | Relevant to claim No. |
|---|---|---|
| X | CN 106716866 A (INTEL IP CORP.) 24 May 2017 (2017-05-24) description, paragraphs [0072]-[0128], paragraphs [0292]-[0296] | 1-24 |
| X | CN 107994932 A (HUAWEI TECHNOLOGIES CO., LTD.) 04 May 2018 (2018-05-04) description, paragraphs [0040]-[0059] | 1, 5-9, 12-17, 21-24 |
| A | CN 108923834 A (TELEFONAKTIEBOLAGET LM ERICSSON (PUBL)) 30 November 2018 (2018-11-30) description paragraphs [0041]-[0094] | 1-24 |
| A | US 2019341978 A1 (SAMSUNG ELECTRONICS CO., LTD.) 07 November 2019 (2019-11-07) description, paragraphs [0020]-[0103] | 1-24 |
| A | US 2020244335 A1 (TELEFONAKTIEBOLAGET LM ERICSSON (PUBL)) 30 July 2020 (2020-07-30) description, paragraphs [0033]-[0081] | 1-24 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 September 2021** | **09 October 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/070605**

**C.    DOCUMENTS CONSIDERED TO BE RELEVANT**

| Category* | Citation of document, with indication, where appropriate, of the relevant passages | Relevant to claim No. |
|---|---|---|
| A | Siyuan Lu, etc. "Block-Diagonal Zero-Forcing Beamforming for Weighted Sum-Rate Maximization in Multi-User Massive MIMO Systems" *2020 IEEE Symposium on Computers and Communications (ISCC),* 10 July 2020 (2020-07-10), sections II and III | 1-24 |

Form PCT/ISA/210 (second sheet) (January 2015)

**INTERNATIONAL SEARCH REPORT**
**Information on patent family members**

International application No.

**PCT/CN2021/070605**

| Patent document cited in search report | | | Publication date (day/month/year) | Patent family member(s) | | | Publication date (day/month/year) |
|---|---|---|---|---|---|---|---|
| CN | 106716866 | A | 24 May 2017 | JP | 6457068 | B2 | 23 January 2019 |
| | | | | JP | 2017531374 | A | 19 October 2017 |
| | | | | US | 10193613 | B2 | 29 January 2019 |
| | | | | KR | 20170046758 | A | 02 May 2017 |
| | | | | CN | 106716866 | B | 29 January 2021 |
| | | | | US | 2017317735 | A1 | 02 November 2017 |
| | | | | EP | 3213425 | A1 | 06 September 2017 |
| | | | | BR | 112017006495 | A2 | 19 December 2017 |
| CN | 107994932 | A | 04 May 2018 | WO | 2018077119 | A1 | 03 May 2018 |
| CN | 108923834 | A | 30 November 2018 | CN | 108923834 | B | 21 February 2020 |
| US | 2019341978 | A1 | 07 November 2019 | WO | 2019212301 | A1 | 07 November 2019 |
| | | | | US | 10511363 | B2 | 17 December 2019 |
| | | | | EP | 3750253 | A4 | 03 March 2021 |
| | | | | EP | 3750253 | A1 | 16 December 2020 |
| | | | | CN | 112075034 | A | 11 December 2020 |
| US | 2020244335 | A1 | 30 July 2020 | WO | 2019030281 | A1 | 14 February 2019 |
| | | | | EP | 3646476 | A1 | 06 May 2020 |

Form PCT/ISA/210 (patent family annex) (January 2015)